# EUROPEAN PATENT APPLICATION

(11) **EP 4 534 305 A1**
(43) Date of publication of application: **09.04.2025**
(21) Application number: 23814842.3
(22) Date of filing: 27.04.2023
(51) Int. Cl.: B60H 1/00, B60L 58/26

(54) **VEHICLE THERMAL MANAGEMENT SYSTEM, AND VEHICLE**

(30) Priority: 31.05.2022 CN 202210613677
(71) Applicant: BYD Company Limited, Shenzhen, Guangdong 518118 (CN)
(72) Inventor: ZHANG, Junyan, Shenzhen, Guangdong 518118 (CN); BAI, Yunhui, Shenzhen, Guangdong 518118 (CN); ZHAO, Shangzhong, Shenzhen, Guangdong 518118 (CN); TAN, Tingshuai, Shenzhen, Guangdong 518118 (CN); TANG, Yifeng, Shenzhen, Guangdong 518118 (CN)
(74) Representative: Mathys & Squire
(86) International application number: PCT/CN2023/091018
(87) International publication number: WO 2023/231656

(57) **Abstract**

A vehicle thermal management system (100) and a vehicle. The vehicle thermal management system (100) comprises a compressor (1), a first internal heat exchanger (2), an external heat exchanger (3), a second internal heat exchanger (4), a first throttling element (5), a second throttling element (6) and an integration module (25), wherein the first internal heat exchanger (2) is in communication with an exhaust port (1b); the external heat exchanger (3) is selectively in communication with the first internal heat exchanger (2) by means of a first pipeline (R1); the external heat exchanger (3) is selectively in communication with an intake port (1a) by means of a second pipeline (R2); the external heat exchanger (3) is selectively in communication with the other end of the first internal heat exchanger (2) by means of a third pipeline (R3); the second internal heat exchanger (4) is selectively in communication with the external heat exchanger (3) by means of a fourth pipeline (R4); the second internal heat exchanger (4) is selectively in communication with the intake port (1a) by means of a fifth pipeline (R5); and at least part of the first pipeline (R1), at least part of the second pipeline (R2), at least part of the third pipeline (R3) and at least part of the fourth pipeline (R4) are all formed in the integration module (25). In this way, the vehicle thermal management system (100) has enriched working modes, and the performance of the vehicle thermal management system (100) is improved.

## Description

### CROSS-REFERENCE TO RELATED APPLICATIONS

The present disclosure is provided based on and claims priority to and benefits of Chinese Patent Application No. 202210613677.7, filed on May 31, 2022. The entire content of the above-referenced application is incorporated herein by reference.

### FIELD

The present disclosure relates to the field of vehicle technologies, and in particular, to a vehicle thermal management system and a vehicle.

### BACKGROUND

In a vehicle in the related art, an air conditioning system is provided to adjust a temperature of a cabin. However, the air-conditioning system has undiversified functions and limited performance, which affects use experience of occupants. In addition, pipelines of the entire system are complex and cumbersome to arrange, resulting in difficult assembly of the entire system, and further, increased difficulty of arranging the entire system in the vehicle.

### SUMMARY

The present disclosure aims to resolve at least one of the technical problems existing in the related art. Therefore, the present disclosure provides a vehicle thermal management system. The vehicle thermal management system has diversified operation modes, and helps to simplify assembly and improve assembly efficiency.

The present disclosure further provides a vehicle including the foregoing vehicle thermal management system.

A vehicle thermal management system according to an embodiment of a first aspect of the present disclosure includes a first system. The first system includes a compressor, a first internal heat exchanger, an external heat exchanger, a second internal heat exchanger, a first throttling element, a second throttling element, and an integrated module. The compressor has an air inlet and an air outlet. The first internal heat exchanger has one end in communication with the air outlet through a refrigerant pipeline. The external heat exchanger has one end selectively in communication with another end of the first internal heat exchanger through a first pipeline, the one end of the external heat exchanger being selectively in communication with the air inlet through a second pipeline, and another end selectively in communication with the other end of the first internal heat exchanger through a third pipeline. The second internal heat exchanger has one end selectively in communication with the other end of the external heat exchanger through a fourth pipeline and another end selectively in communication with the air inlet through a fifth pipeline. The first throttling element is connected in series to the fourth pipeline. The second throttling element is connected in series to the third pipeline. At least a part of the first pipeline, at least a part of the second pipeline, at least a part of the third pipeline, and at least a part of the fourth pipeline is each formed in the integrated module. The first throttling element and the second throttling element are each arranged on the integrated module.

The vehicle thermal management system according to the embodiments of the present disclosure enriches operation modes of the vehicle thermal management system, and improves performance of the vehicle thermal management system, which is conducive to improving experience of occupants while helping to achieve modular design of the vehicle thermal management system, is conducive to improving assembly efficiency of the vehicle thermal management system while facilitating overall vehicle deployment and product assembly of a vehicle, and reducing costs of the vehicle thermal management system.

In some embodiments, the integrated module is internally divided into a first temperature region, a second temperature region, and a third temperature region. The at least a part of the first pipeline, the at least a part of the second pipeline, and at least a part of an upstream of the third pipeline are each located in the first temperature region. At least a part of a downstream of the third pipeline and at least a part of a downstream of the fourth pipeline are each located in the second temperature region. The at least a part of the downstream of the fourth pipeline is located in the third temperature region.

In some embodiments, a first slot and a second slot are formed on the integrated module. The first slot is provided between the first temperature region and the third temperature region. The second slot is provided between the first temperature region and the second temperature region.

In some embodiments, the third pipeline and the fourth pipeline have a first common branch. The first common branch has a first end and a second end. The third pipeline further includes a first branch and a second branch. The first branch is in communication with the other end of the first internal heat exchanger and the second end. The second branch is in communication with the first end and the other end of the external heat exchanger. The second throttling element is connected in series to the second branch. The fourth pipeline further includes a third branch and a fourth branch. The third branch is in communication with the one end of the second internal heat exchanger and the first end. The first throttling element is connected in series to the third branch. The fourth branch is in communication with the other end of the external heat exchanger and the second end. A check valve is arranged in series connection with the fourth branch, and has an inlet end in communication with the other end of the external heat exchanger and an outlet end in communication with the second end.

In some embodiments, the first branch, the second branch, and the third branch are each formed in the integrated module. The fourth branch and the first common branch are each arranged outside the integrated module.

In some embodiments, the integrated module is internally divided into a first temperature region, a second temperature region, and a third temperature region. The first branch is located in the first temperature region. The second branch and a part of the third branch before the first throttling element are each located in the second temperature region. A part of the third branch after the first throttling element is located in the third temperature region.

In some embodiments, the second pipeline and the fifth pipeline have a second common branch. The second common branch has a third end and a fourth end. The fourth end of the second common branch is in communication with the air inlet. The second pipeline further includes a fifth branch. The fifth branch is in communication with the one end of the external heat exchanger and the third end of the second common branch. The fifth pipeline further includes a sixth branch. The sixth branch is in communication with the other end of the second internal heat exchanger and the third end of the second common branch.

In some embodiments, the fifth branch and the sixth branch are each formed in the integrated module. The second common branch is arranged outside the integrated module.

In some embodiments, the integrated module is internally divided into a first temperature region, a second temperature region, and a third temperature region. The fifth branch is located in the first temperature region. A part of an upstream of the sixth branch is located in the third temperature region. A part of a downstream of the sixth branch is located in the first temperature region.

In some embodiments, the third pipeline and the fourth pipeline have a first common branch. On the third pipeline, the first common branch is located upstream of the second throttling element. On the fourth pipeline, the first common branch is located upstream of the first throttling element. The vehicle thermal management system further includes a first heat exchange apparatus. The first heat exchange apparatus has a first heat exchange flow path and a second heat exchange flow path exchanging heat with each other. The first heat exchange flow path is connected in series to the first common branch. The second heat exchange flow path is connected in series to the second common branch.

In some embodiments, the vehicle thermal management system further includes a liquid storage tank. The liquid storage tank is connected in series to the first common branch. In addition, the liquid storage tank is located upstream of the first heat exchange flow path.

In some embodiments, the vehicle thermal management system has a cabin-only cooling mode and an air source heat pump heating mode. In the cabin-only cooling mode, the first pipeline, the fourth pipeline, and the fifth pipeline are all connected, and the second pipeline and the third pipeline are all disconnected. In the air source heat pump heating mode, the second pipeline and the third pipeline are all connected, and the first pipeline and the fourth pipeline are all disconnected.

In some embodiments, the vehicle thermal management system further includes a battery heat exchanger and a third throttling element. The battery heat exchanger has one end selectively in communication with the air inlet through a sixth pipeline and another end selectively in communication with the other end of the external heat exchanger through a seventh pipeline. The third throttling element is connected in series to the seventh pipeline.

In some embodiments, the seventh pipeline and the fourth pipeline have a third common branch. The third common branch has a fifth end and a sixth end. The fifth end of the third common branch is in communication with the other end of the external heat exchanger. The seventh pipeline further includes a seventh branch. The seventh branch is in communication with the other end of the battery heat exchanger and the sixth end of the third common branch. The third throttling element is connected in series to the seventh branch. The fourth pipeline further includes a third branch. The third branch is in communication with the one end of the second internal heat exchanger and the sixth end of the third common branch. The first throttling element is connected in series to the third branch.

In some embodiments, a part of an upstream of the third common branch, the seventh branch, and the third branch are each integrated into the integrated module.

In some embodiments, the integrated module is internally divided into a first temperature region, a second temperature region, and a third temperature region. The part of the upstream of the third common branch is located in the first temperature region and the second temperature region. A part of the third branch before the first throttling element is located in the second temperature region. A part of the third branch after the first throttling element is located in the third temperature region. A part of the seventh branch before the third throttling element is located in the second temperature region. A part of the seventh branch after the third throttling element is located in the third temperature region.

In some embodiments, the sixth pipeline and the fifth pipeline have a second common branch. The second common branch has a third end and a fourth end. The fourth end of the second common branch is in communication with the air inlet. The vehicle thermal management system further includes a second heat exchange apparatus. The second heat exchange apparatus has a third heat exchange flow path and a fourth heat exchange flow path exchanging heat with each other. The third heat exchange flow path is connected in series to the third common branch. The fourth heat exchange flow path is connected in series to the second common branch.

In some embodiments, the vehicle thermal management system further includes a battery-only cooling mode and a cabin-battery-dual cooling mode. In the battery-only cooling mode, the first pipeline, the sixth pipeline, and the seventh pipeline are all connected. In the cabin-battery-dual cooling mode, the first pipeline, the fourth pipeline, the fifth pipeline, the sixth pipeline, and the seventh pipeline are all connected.

In some embodiments, the vehicle thermal management system further includes a second system, a third heat exchange apparatus, and a fourth throttling element. The second system includes an engine cooling jacket, a drive pump, and a heater core being in communication through a first circulation pipeline. The third heat exchange apparatus has a fifth heat exchange flow path and a sixth heat exchange flow path exchanging heat with each other. The fifth heat exchange flow path is connected in series to the first circulation pipeline and located downstream of the heater core. The sixth heat exchange flow path has one end selectively in communication with the other end of the first internal heat exchanger through an eighth pipeline and another end in communication with the air inlet through a ninth pipeline. The fourth throttling element is connected in series to the eighth pipeline.

In some embodiments, the eighth pipeline and the fourth pipeline have the first common branch. The first common branch has a first end and a second end. The fourth pipeline further includes a third branch and a fourth branch. The third branch is in communication with the one end of the second internal heat exchanger and the first end. The first throttling element is connected in series to the third branch. The fourth branch is in communication with the other end of the external heat exchanger and the second end. A check valve is arranged in series connection with the fourth branch, and has an inlet end in communication with the other end of the external heat exchanger and an outlet end in communication with the second end. The eighth pipeline further includes an eighth branch and a ninth branch. The eighth branch is in communication with the other end of the first internal heat exchanger and the second end. The ninth branch is in communication with the first end and the one end of the sixth heat exchange flow path. The fourth throttling element is connected in series to the ninth branch.

In some embodiments, the third branch, the eighth branch, and the ninth branch are each formed in the integrated module. The fourth branch and the first common branch are each arranged outside the integrated module.

In some embodiments, the integrated module is internally divided into a first temperature region, a second temperature region, and a third temperature region. A part of the third branch before the first throttling element is located in the second temperature region. A part of the third branch after the first throttling element is located in the third temperature region. The eighth branch is located in the first temperature region. The ninth branch is located in the second temperature region.

In some embodiments, the ninth pipeline and the fifth pipeline have a second common branch. The second common branch has a third end and a fourth end. The fourth end of the second common branch is in communication with the air inlet. The fifth pipeline further includes a sixth branch. The sixth branch is in communication with the other end of the second internal heat exchanger and the third end of the second common branch. The ninth pipeline further includes a tenth branch. The tenth branch is in communication with the other end of the sixth heat exchange flow path and the third end of the second common branch.

In some embodiments, the sixth branch and the tenth branch are each formed in the integrated module, and the second common branch is arranged outside the integrated module.

In some embodiments, the integrated module is internally divided into a first temperature region, a second temperature region, and a third temperature region. A part of an upstream of the sixth branch is located in the third temperature region. A part of a downstream of the sixth branch is located in the first temperature region. The tenth branch is located in the first temperature region.

In some embodiments, the second system further includes a reversing element and an engine cooling jacket. The reversing element is connected in series between the fifth heat exchange flow path and the drive pump and includes a first valve port, a second valve port, a third valve port, and a fourth valve port. The first valve port is switchably in communication with one of the second valve port and the third valve port. The fourth valve port is switchably in communication with the other of the second valve port and the third valve port. The first valve port is in communication with the drive pump. The second valve port is in communication with the fifth heat exchange flow path. The engine cooling jacket is in communication with the third valve port and the fourth valve port respectively through a second circulation pipeline.

In some embodiments, the second system further includes an electric heater. The electric heater is connected in series between the drive pump and the heater core, and located upstream of the heater core.

In some embodiments, the vehicle thermal management system further has a water source heat pump heating mode and an air source-water source-combined heat pump heating mode. In the water source heat pump heating mode, the eighth pipeline and the ninth pipeline are all connected, and the drive pump operates. In the air source-water source-combined heat pump heating mode, the second pipeline, the third pipeline, the eighth pipeline, and the ninth pipeline are all connected, and the first pipeline and the fourth pipeline are all disconnected.

In some embodiments, the vehicle thermal management system further includes a battery heat exchanger, a third heat exchange apparatus, a third throttling element, and a second system. The battery heat exchanger has one end selectively in communication with the air outlet through a tenth pipeline. The third heat exchange apparatus has a fifth heat exchange flow path and a sixth heat exchange flow path exchanging heat with each other. The sixth heat exchange flow path has one end selectively in communication with another end of the battery heat exchanger through an eleventh pipeline and another end in communication with the air inlet through a ninth pipeline. The third throttling element is connected in series to the eleventh pipeline. The second system includes an engine cooling jacket, a drive pump, and a heater core being in communication through a first circulation pipeline. The fifth heat exchange flow path is connected in series to the first circulation pipeline and located downstream of the heater core.

In some embodiments, the tenth pipeline and the eleventh pipeline are each formed in the integrated module.

In some embodiments, the integrated module is internally divided into a first temperature region, a second temperature region, and a third temperature region. The tenth pipeline and the eleventh pipeline are each located in the first temperature region.

In some embodiments, the vehicle thermal management system further includes a water source heat pump-battery heating mode. In the water source heat pump-battery heating mode, the ninth pipeline and the tenth pipeline are all connected, and the drive pump operates.

In some embodiments, the one end of the sixth heat exchange flow path is in communication with the other end of the first internal heat exchanger through an eighth pipeline. The vehicle thermal management system further includes a fourth throttling element. The fourth throttling element is connected in series to the eighth pipeline.

In some embodiments, the vehicle thermal management system further includes a water source heat pump heating-water source heat pump-battery heating combined mode. In the water source heat pump heating-water source heat pump-battery heating combined mode, the eighth pipeline, the ninth pipeline, and the tenth pipeline are all connected, and the drive pump operates.

A vehicle according to an embodiment of a second aspect of the present disclosure includes the vehicle thermal management system according to the foregoing embodiment of the first aspect of the present disclosure.

For the vehicle according to this embodiment of the present disclosure, the foregoing vehicle thermal management system is adopted, which is conducive to improving experience of occupants.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings, where:
FIG. 1 is a schematic diagram of a vehicle thermal management system according to an embodiment of the present disclosure;
FIG. 2 is a schematic diagram of the vehicle thermal management system shown in FIG. 1 in a cabin-only cooling mode, an arrow indicating a flowing direction of a refrigerant;
FIG. 3 is a schematic diagram of the vehicle thermal management system shown in FIG. 1 in an air source heat pump heating mode, an arrow indicating a flowing direction of a refrigerant;
FIG. 4 is a schematic diagram of the vehicle thermal management system shown in FIG. 1 in a battery-only cooling mode, an arrow indicating a flowing direction of a refrigerant;
FIG. 5 is a schematic diagram of the vehicle thermal management system shown in FIG. 1 in a cabin-battery-dual cooling mode, an arrow indicating a flowing direction of a refrigerant;
FIG. 6 is a schematic diagram of the vehicle thermal management system shown in FIG. 1 in a water source heat pump heating mode, an arrow indicating a flowing direction of a refrigerant;
FIG. 7 is a schematic diagram of the vehicle thermal management system shown in FIG. 1 in an air source-water source-combined heat pump heating mode, an arrow indicating a flowing direction of a refrigerant;
FIG. 8 is a schematic diagram of the vehicle thermal management system shown in FIG. 1 in a water source heat pump-battery heating mode, an arrow indicating a flowing direction of a refrigerant;
FIG. 9 is a schematic diagram of the vehicle thermal management system shown in FIG. 1 in a water source heat pump heating-water source heat pump-battery heating combined mode, an arrow indicating a flowing direction of a refrigerant;
FIG. 10 is a schematic diagram of integration of the vehicle thermal management system shown in FIG. 1, parts outside dashed-line boxes being integrated;
FIG. 11 is a schematic diagram of an integrated module shown in FIG. 10;
FIG. 12 is a schematic diagram of the integrated module shown in FIG. 11;
FIG. 13 is another schematic diagram of the integrated module shown in FIG. 11;
FIG. 14 is a schematic diagram of a valve seat of the integrated module shown in FIG. 11;
FIG. 15 is a schematic diagram of a flow channel defined by the valve seat shown in FIG. 14;
FIG. 16 is another schematic diagram of the flow channel shown in FIG. 15;
FIG. 17 is still another schematic diagram of the integrated module shown in FIG. 11;
FIG. 18 is an exploded view of the integrated module shown in FIG. 11; and
FIG. 19 is a schematic diagram of a vehicle according to an embodiment of the present disclosure.

List of reference numerals:
vehicle thermal management system 100, first system 100a, second system 100b, first circulation pipeline 100c, second circulation pipeline 100d, vehicle 200;
compressor 1, air inlet 1a, air outlet 1b;
first internal heat exchanger 2, one end 2a of first internal heat exchanger, another end 2b of first internal heat exchanger;
external heat exchanger 3, one end 3a of external heat exchanger, another end 3b of external heat exchanger;
second internal heat exchanger 4, one end 4a of second internal heat exchanger, another end 4b of second internal heat exchanger;
first throttling element 5, second throttling element 6;
first control valve 71, second control valve 72, third control valve 73;
check valve 8, liquid storage tank 9, first heat exchange apparatus 10, first heat exchange flow path 10a, second heat exchange flow path 10b;
battery heat exchanger 11, one end 11a of battery heat exchanger, another end 11b of battery heat exchanger;
third throttling element 12, second heat exchange apparatus 13, third heat exchange flow path 13a, fourth heat exchange flow path 13b;
third heat exchange apparatus 14, fifth heat exchange flow path 14a, sixth heat exchange flow path 14b, fourth throttling element 15;
reversing element 16, first valve port 16a, second valve port 16b, third valve port 16c, fourth valve port 16d;
engine cooling jacket 17, drive pump 18, heater core 19, electric heater 20;
fourth control valve 21, fifth control valve 22, sixth control valve 23, seventh control valve 24;
integrated module 25, first temperature region 251, second temperature region 252, third temperature region 253;
first slot 25a, second slot 25b, third slot 25c, first mounting piece A1, second mounting piece A2;
refrigerant pipeline R, first pipeline R1, second pipeline R2, second common branch R20, third end R20a, fourth end R20b, fifth branch R21, third pipeline R3, first common branch R30, first end R30a, second end R30b, first branch R31, second branch R32, fourth pipeline R4, third common branch R40, fifth end R40a, sixth end R40b, third branch R41, fourth branch R42, fifth pipeline R5, sixth branch R51, sixth pipeline R6, seventh pipeline R7, seventh branch R71, eighth pipeline R8, eighth branch R81, ninth branch R82, ninth pipeline R9, tenth branch R91, tenth pipeline R10, eleventh pipeline R11.

### DETAILED DESCRIPTION

Embodiments of the present disclosure are described below in detail, and examples of the embodiments are shown in accompanying drawings, where the same or similar elements or the elements having same or similar functions are denoted by the same or similar reference numerals throughout the description. The embodiments described below with reference to the accompanying drawings are exemplary and used merely for explaining the present disclosure, and should not be construed as a limitation on the present disclosure.

The present disclosure below provides many different embodiments or examples for implementing different structures of the present disclosure. To simplify disclosure of the present disclosure, components and settings of specific examples are described below. Certainly, the components and settings are merely examples, and are not intended to limit the present disclosure. In addition, reference numerals and/or letters may be repeated in different examples in the present disclosure. This repetition is for simplicity and clarity, which itself does not indicate a relationship between the embodiments and/or arrangements discussed. In addition, the present disclosure provides examples of various specific processes and materials, but a person skilled in the art may be aware of the applicability of other processes and/or the use of other materials.

A vehicle thermal management system 100 according to the embodiments of the present disclosure is described below with reference to the accompanying drawings.

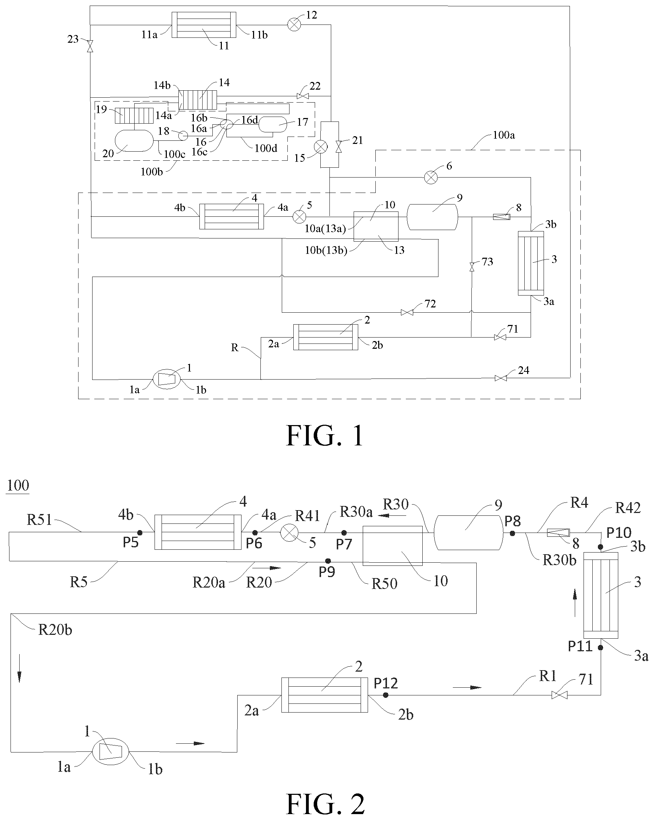

As shown in FIG. 1 to FIG. 3, the vehicle thermal management system 100 includes a first system 100a. The first system 100a includes a compressor 1, a first internal heat exchanger 2, an external heat exchanger 3, a second internal heat exchanger 4, a first throttling element 5, and a second throttling element 6.

The compressor 1 has an air inlet 1a and an air outlet 1b. A refrigerant flows into the compressor 1 from the air inlet 1a. The compressor 1 compresses the refrigerant. After the compression is completed, the refrigerant is discharged from the air outlet 1b. The first internal heat exchanger 2 has one end 2a in communication with the air outlet 1b through a refrigerant pipeline R. In this case, the refrigerant discharged from the air outlet 1b flows, through the refrigerant pipeline R, to the first internal heat exchanger 2 to exchange heat, so that the first internal heat exchanger 2 can adjust a temperature of a cabin and the like.

The external heat exchanger 3 has one end 3a selectively in communication with another end 2b of the first internal heat exchanger 2 through a first pipeline R1. In this case, when the first pipeline R1 is connected, the heat-exchanged refrigerant in the first internal heat exchanger 2 may flow to the external heat exchanger 3 through the first pipeline R1 to continue to exchange heat, so that heat of the refrigerant is fully utilized. When the first pipeline R1 is disconnected (that is, not connected), circulation of the refrigerant cannot be implemented between the one end 3a of the external heat exchanger 3 and the other end 2b of the first heat exchanger 2 through the first pipeline R1. For example, in the examples of FIG. 1 and FIG. 2, a first control valve 71 is provided on the first pipeline R1. The first control valve 71 controls connection and disconnection of the first pipeline R1, to implement selective communication between the one end 3a of the external heat exchanger 3 and the other end 2b of the first internal heat exchanger 2.

The second internal heat exchanger 4 has one end 4a selectively in communication with another end 3b of the external heat exchanger 3 through a fourth pipeline R4. The fourth pipeline R4 may be connected or disconnected. The second internal heat exchanger 4 has another end 4b selectively in communication with the air inlet 1a through a fifth pipeline R5. The fifth pipeline R5 may be connected or disconnected. The first throttling element 5 is connected in series to the fourth pipeline R4. In this case, the first throttling element 5 can throttle and decompress the refrigerant in the fourth pipeline R4. To be specific, the refrigerant flowing out from the external heat exchanger 3 passes through the fourth pipeline R4 and flows through the first throttling element 5 to the second internal heat exchanger 4, to exchange heat at the second internal heat exchanger 4, so that the second internal heat exchanger 4 can adjust a temperature in the cabin and the like. The heat-exchanged refrigerant may flow to the compressor 1 through the fifth pipeline R5 for a next circulation.

In view of the above, the compressor 1, the first internal heat exchanger 2, the first pipeline R1, the external heat exchanger 3, the fourth pipeline R4, the first throttling element 5, the second internal heat exchanger 4, and the fifth pipeline R5 may constitute a first refrigerant circulation flow path, as shown in FIG. 2. The first internal heat exchanger 2 and the external heat exchanger 3 may each be used as a condenser, and the second internal heat exchanger 4 may be used as an evaporator. In this case, the second internal heat exchanger 4 may lower the temperature in the cabin. Although the first internal heat exchanger 2 may raise the temperature in the cabin to some extent, since the first internal heat exchanger 2 and the external heat exchanger 3 each serve as a condenser, it is convenient to reduce an amount of exchanged heat between the refrigerant and the first internal heat exchanger 2. Therefore, impact of the first internal heat exchanger 2 on the temperature in the cabin can be reduced to some extent.

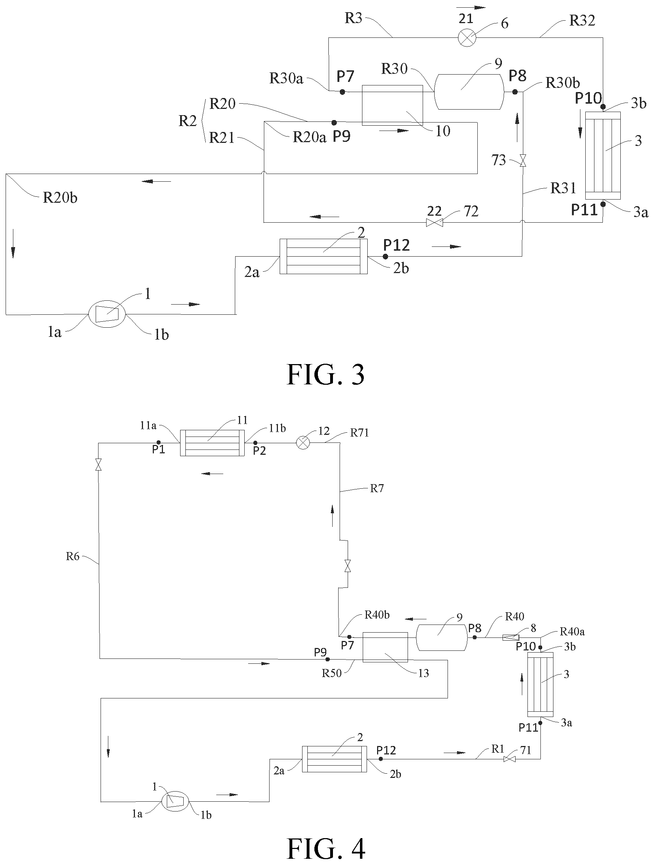

In addition, the external heat exchanger 3 has the one end 3a selectively in communication with the air inlet 1a through the second pipeline R2. In this case, when the second pipeline R2 is connected, the heat-exchanged refrigerant in the external heat exchanger 3 may flow to the compressor 1 through the second pipeline R2. When the second pipeline R2 is disconnected, circulation of the refrigerant cannot be implemented between the one end 3a of the external heat exchanger 3 and the air inlet 1a through the second pipeline R2. For example, in the examples of FIG. 1 and FIG. 3, a second control valve 72 is provided on the second pipeline R2. The second control valve 72 controls connection and disconnection of the second pipeline R2, to implement selective communication between the one end 3a of the external heat exchanger 3 and the air inlet 1a.

The external heat exchanger 3 has the other end 3b selectively in communication with the other end 2b of the first internal heat exchanger 2 through a third pipeline R3. In this case, when the third pipeline R3 is connected, circulation of the refrigerant is implemented between the other end 3b of the external heat exchanger 3 and the other end 2b of the first internal heat exchanger 2 through the third pipeline R3. When the third pipeline R3 is disconnected, circulation of the refrigerant cannot be implemented between the other end 3b of the external heat exchanger 3 and the other end 2b of the first internal heat exchanger 2 through the third pipeline R3. For example, in the examples of FIG. 1 and FIG. 3, a third control valve 73 is provided on the third pipeline R3. The third control valve 73 controls connection and disconnection of the third pipeline R3, to implement selective communication between the other end 3b of the external heat exchanger 3 and the other end 2b of the first internal heat exchanger 2.

The second throttling element 6 is connected in series to the third pipeline R3. In this case, the second throttling element 6 can throttle and decompress the refrigerant in the third pipeline R3. To be specific, the refrigerant flowing out from the first internal heat exchanger 2 passes through the third pipeline R3 and flows through the second throttling element 6 to the external heat exchanger 3, to exchange heat at the external heat exchanger 3, and then flow to the compressor 1 through the second pipeline R2 for a next circulation.

In view of the above, the compressor 1, the first internal heat exchanger 2, the third pipeline R3, the second throttling element 6, the external heat exchanger 3, and the second pipeline R2 may constitute a second refrigerant circulation flow path, as shown in FIG. 3. The first internal heat exchanger 2 may be used as a condenser to implement heating of the cabin, and the external heat exchanger 3 may be used as an evaporator.

As shown in FIG. 1 to FIG. 3, during operation of the vehicle thermal management system 100, switching of an operation mode may be implemented by controlling connection and disconnection of the first pipeline R1 and the second pipeline R2.

For example, as shown in FIG. 2, the first pipeline R1 is connected, and the second pipeline R2 is disconnected. In this case, the refrigerant may circulate in the first refrigerant circulation flow path and does not circulate in the second refrigerant circulation flow path, so that the temperature of the cabin can be lowered. In a second state, as shown in FIG. 3, the first pipeline R1 is disconnected, and the second pipeline R2 is connected. In this case, the refrigerant may circulate in the second refrigerant circulation flow path and does not circulate in the first refrigerant circulation flow path, so that the temperature of the cabin can be raised.

Therefore, the vehicle thermal management system 100 is enabled to have multiple modes, and the vehicle thermal management system 100 may switch between the multiple modes.

For example, the vehicle thermal management system 100 may have a cabin-only cooling mode and an air source heat pump heating mode.

In the cabin-only cooling mode (shown in FIG. 2), the first pipeline R1, the fourth pipeline R4, and the fifth pipeline R5 are all connected, and the second pipeline R2 and the third pipeline R3 are all disconnected. In this case, after being compressed in the compressor 1, the refrigerant flows out from the air outlet 1b of the compressor 1 to the first internal heat exchanger 2, to exchange heat. The heat-exchanged refrigerant flows through the first pipeline R1 to the external heat exchanger 3, to exchange heat. The heat-exchanged refrigerant passes through the fourth pipeline R4 and flows through the first throttling element 5 to the second internal heat exchanger 4, to exchange heat. The heat-exchanged refrigerant flows through the fifth pipeline R5 to the air inlet 1a of the compressor 1 to complete a circulation. The first internal heat exchanger 2 and the external heat exchanger 3 are each used as a condenser, and the second internal heat exchanger 4 may be used as an evaporator, so that the refrigeration performance of the vehicle thermal management system 100 is improved.

In the air source heat pump heating mode (shown in FIG. 3), the second pipeline R2 and the third pipeline R3 are all connected, and the first pipeline R1 and the fourth pipeline R4 are all disconnected. In this case, after being compressed in the compressor 1, the refrigerant flows out from the air outlet 1b of the compressor 1 to the first internal heat exchanger 2, to exchange heat. The heat-exchanged refrigerant passes through the third pipeline R3 and flows through the second throttling element 6 to the external heat exchanger 3, to exchange heat. The heat-exchanged refrigerant flows through the second pipeline R2 to the air inlet 1a of the compressor 1 to complete a circulation. The first internal heat exchanger 2 may be used as a condenser, and the external heat exchanger 3 may be used as an evaporator. In this case, the vehicle thermal management system 100 may transfer heat of the air to the cabin through the refrigerant, so that the heating performance of the vehicle thermal management system 100 is ensured.

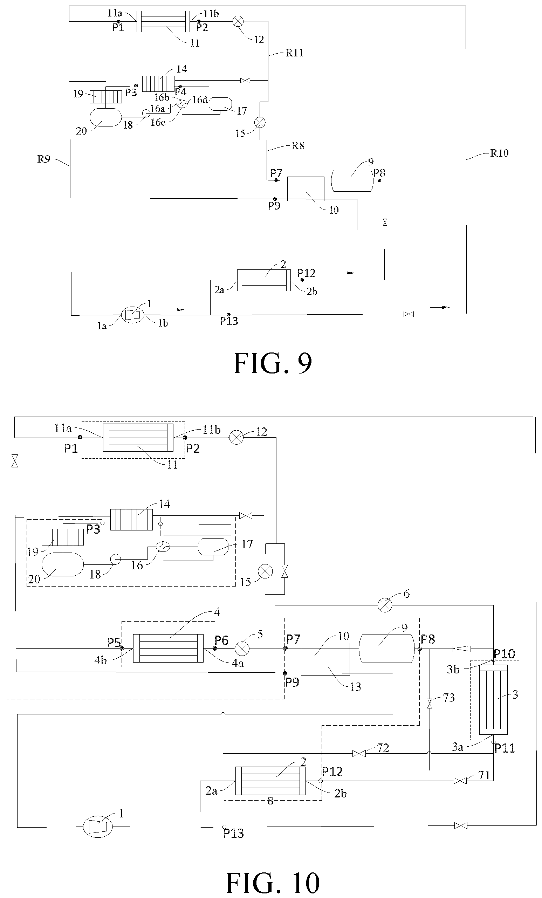

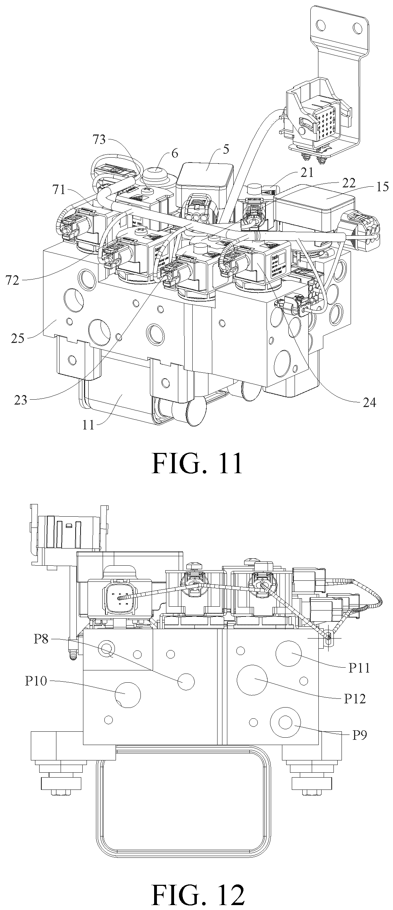

As shown in FIG. 10 to FIG. 15, the first system 100a further includes an integrated module 25. At least a part of the first pipeline R1, at least a part of the second pipeline R2, at least a part of the third pipeline R3, and at least a part of the fourth pipeline R4 are each formed in the integrated module 25. In other words, at least a part of the first pipeline R1, at least a part of the second pipeline R2, at least a part of the third pipeline R3, and at least a part of the fourth pipeline R4 are respectively defined in the integrated module 25. This helps to achieve modular design of the vehicle thermal management system 100, reduce the length of pipelines of the overall system, reduce a quantity of pipeline joints, and is conducive to simplifying assembly of the vehicle thermal management system 100, and improving assembly efficiency of the vehicle thermal management system 100 while facilitating overall vehicle deployment and product assembly of the vehicle. In addition, the integrated module 25 integrated into one facilitates implementing centralized control, which is conducive to further reducing costs of the vehicle thermal management system 100.

The first throttling element 5 and the second throttling element 6 are each arranged on the integrated module 25, which facilitates further modular design of the first system 100a.

Therefore, the vehicle thermal management system 100 according to the embodiments of the present disclosure enriches operation modes of the vehicle thermal management system 100, and improves performance of the vehicle thermal management system 100, which is conducive to improving experience of occupants while helping to achieve modular design of the vehicle thermal management system 100, is conducive to improving assembly efficiency of the vehicle thermal management system 100 while facilitating overall vehicle deployment and product assembly of a vehicle 200, and reducing costs of the vehicle thermal management system 100.

In some embodiments of the present disclosure, as shown in FIG. 10 to FIG. 15, the integrated module 25 is internally divided into a first temperature region 251, a second temperature region 252, and a third temperature region 253. The at least a part of the first pipeline R1, the at least a part of the second pipeline R2, and at least a part of an upstream of the third pipeline R3 are each located in the first temperature region 251. At least a part of a downstream of the third pipeline R3 and at least a part of a downstream of the fourth pipeline R4 are each located in the second temperature region 252. The at least a part of the downstream of the fourth pipeline R4 is located in the third temperature region 253.

In view of the above, a temperature of the first temperature region 251 is higher than a temperature of the second temperature region 252, and the temperature of the second temperature region 252 is higher than a temperature of the third temperature region 253, so that the first temperature region 251 is formed as a high-temperature region, the second temperature region 252 is formed as a medium-temperature region, and the third temperature region 253 is formed as a low-temperature region. Centralized arrangement of pipeline parts with corresponding temperatures of the first pipeline R1, the second pipeline R2, the third pipeline R3, and the fourth pipeline R4 can be implemented according to the temperatures of the refrigerants in the first pipeline R1, the second pipeline R2, the third pipeline R3, and the fourth pipeline R4, which helps to reduce an amount of heat transferred by the high-temperature refrigerant to the medium-temperature refrigerant or the low-temperature refrigerant, thereby ensuring the performance of the vehicle thermal management system 100.

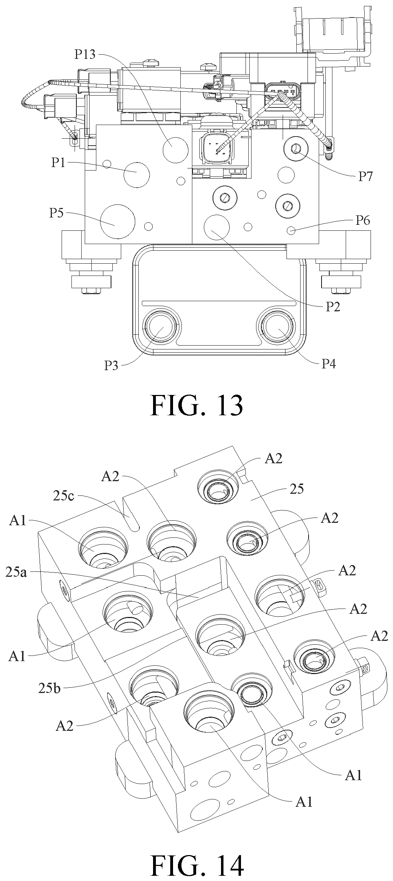

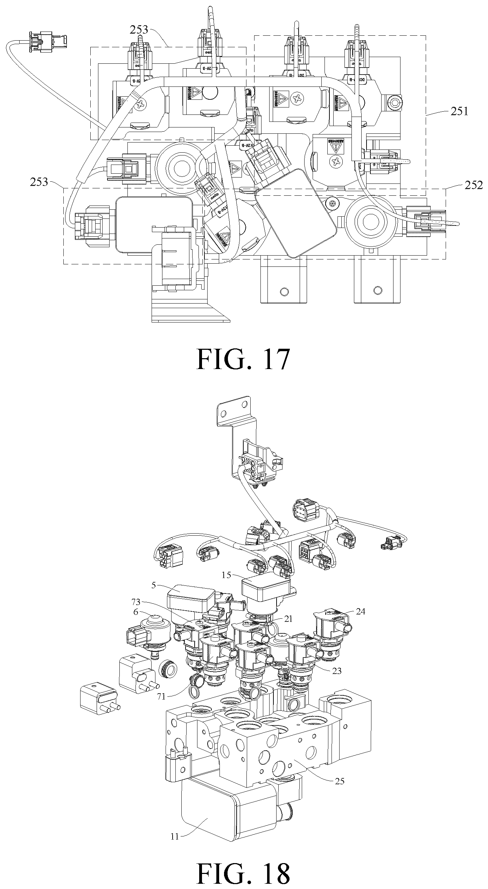

In some embodiments of the present disclosure, as shown in FIG. 14 to FIG. 17, a first slot 25a and a second slot 25b are formed on the integrated module 25. The first slot 25a is arranged between the first temperature region 251 and the third temperature region 253 to space the first temperature region 251 from the third temperature region 253 and reduce heat transferred from the first temperature region 251 to the third temperature region 253. The second slot 25b is arranged between the first temperature region 251 and the second temperature region 252 to space the first temperature region 251 from the second temperature region 252 and reduce heat transferred from the first temperature region 251 to the second temperature region 252.

In view of the above, arrangement of the first slot 25a and the second slot 25b can avoid that heat produced by a flow channel in the high-temperature region is transferred to the medium-temperature region or the low-temperature region and causes a decreased degree of under-cooling before throttling by a throttling element and increased dryness of the refrigerant entering the evaporator, and avoid that when a vapor-liquid two-phase refrigerant enters the evaporator, partially-saturated vapor cannot absorb heat and change a phase in the evaporator, and a decreased heat exchange capacity of the evaporator causes a decreased cooling capacity, thereby further effectively ensuring the performance of the vehicle thermal management system 100.

In some embodiments, as shown in FIG. 1 to FIG. 3, the vehicle thermal management system 100 includes a valve group. The valve group includes a first control valve 71 and a second control valve 72. The first control valve 71 is connected in series to the first pipeline R1, so that the first control valve 71 can control connection and disconnection of the first pipeline R1. The second control valve 72 is connected in series to the second pipeline R2, so that the second control valve 72 can control connection and disconnection of the second pipeline R2.

Optionally, the first control valve 71 and the second control valve 72 are each a solenoid valve.

Certainly, the present disclosure is not limited thereto. In other embodiments, the valve group may include a reversing valve. The reversing valve includes a first port, a second port, and a third port. The first port is switchably in communication with one of the second port and the third port. The first port is in communication with the other end 2b of the first internal heat exchanger 2. The second port is in communication with the first pipeline R1. The third port is in communication with the second pipeline R2. The valve group can also switch between a first state and a second state. Optionally, the reversing valve is a three-way reversing valve.

Optionally, the first throttling element 5 and the second throttling element 6 are each a throttling element with an adjustable opening degree. For example, the first throttling element 5 and the second throttling element 6 may automatically adjust a flow rate of the refrigerant according to a pressure at an inlet, to ensure stability of the temperature in the cabin and ensure comfort of the entire vehicle. Certainly, connection and disconnection of the third pipeline R3 may be achieved by adjusting the opening degree of the second throttling element 6. For example, if the second throttling element 6 is opened, the third pipeline R3 is connected, and if the second throttling element 6 is closed (that is, the opening degree is 0), the third pipeline R3 is disconnected. Similarly, connection and disconnection of the fourth pipeline R4 may be achieved by adjusting the opening degree of the first throttling element 5. For example, if the first throttling element 5 is opened, the fourth pipeline R4 is connected, and if the first throttling element 5 is closed (that is, the opening degree is 0), the fourth pipeline R4 is disconnected.

In this case, when the valve group switches to the first state, the first throttling element 5 is opened to make the fourth pipeline R4 connected, and the second throttling element 6 is closed to make the third pipeline R3 disconnected. When the valve group switches to the second state, the second throttling element 6 is opened to make the third pipeline R3 connected, and the first throttling element 5 is closed to make the fourth pipeline R4 disconnected.

Optionally, the first throttling element 5 is an electronic expansion valve. The second throttling element 6 is an electronic expansion valve.

In some embodiments of the present disclosure, as shown in FIG. 1 to FIG. 3, the third pipeline R3 and the fourth pipeline R4 have a first common branch R30. The first common branch R30 has a first end R30a and a second end R30b.

The third pipeline R3 further includes a first branch R31 and a second branch R32. The first branch R31 is in communication with the other end 2b of the first internal heat exchanger 2 and the second end R30b of the first common branch R30. The second branch R32 is in communication with the first end R30a of the first common branch R30 and the other end 3b of the external heat exchanger 3. The second throttling element 6 is connected in series to the second branch R32.

The fourth pipeline R4 further includes a third branch R41 and a fourth branch R42. The third branch R41 is in communication with the one end 4a of the second internal heat exchanger 4 and the first end R30a of the first common branch R30. The first throttling element 5 is connected in series to the third branch R41. The fourth branch R42 is in communication with the other end 3b of the external heat exchanger 3 and the second end R30b of the first common branch R30.

Therefore, while ensuring normal use of the third pipeline R3 and the fourth pipeline R4, the third pipeline R3 and the fourth pipeline R4 are arranged to share the first common branch R30, which helps to save pipeline lengths of the third pipeline R3 and the fourth pipeline R4 and facilitates arrangement of the third pipeline R3 and the fourth pipeline R4.

As shown in FIG. 1 to FIG. 3, a check valve 8 is arranged in series on the fourth branch R42. An inlet end of the check valve 8 is in communication with the foregoing other end 3b of the external heat exchanger 3, and an outlet end of the check valve 8 is in communication with the second end R30b of the first common branch R30. In this case, the refrigerant in the fourth branch R42 can only flow from the foregoing other end 3b of the external heat exchanger 3 toward the second end R30b of the first common branch R30, to help to prevent the refrigerant in the first branch R31 from directly flowing to the external heat exchanger 3 through the fourth branch R42 when the valve group switches to the second state, to ensure that the refrigerant in the first branch R31 passes through the first common branch R30 and the second branch R32, and then flows to the external heat exchanger 3 after passing through the second throttling element 6, thereby ensuring normal operation of the second refrigerant circulation flow path, so that the vehicle thermal management system 100 can implement air source heat pump heating.

In some embodiments of the present disclosure, as shown in FIG. 2, FIG. 3, and FIG. 10, the first branch R31, the second branch R32, and the third branch R41 are each formed in the integrated module 25. In other words, the first branch R31, the second branch R32, and the third branch R41 are respectively defined in the integrated module 25. The fourth branch R42 and the first common branch R30 are each arranged outside the integrated module 25. In other words, the fourth branch R42 and the first common branch R30 are not defined in the integrated module 25, to help to arrange another component on the first common branch R30, to further improve performance of the vehicle thermal management system 100.

In some embodiments of the present disclosure, as shown in FIG. 10 to FIG. 15, the integrated module 25 is internally divided into a first temperature region 251, a second temperature region 252, and a third temperature region 253. The first branch R31 is located in the first temperature region 251. A part of the third branch R41 before the first throttling element 5 and the second branch R32 are each located in the second temperature region 252. A part of the third branch R41 after the first throttling element 5 is located in the third temperature region 253.

It should be noted that a part of a branch before a feature may be understood as a part of the branch located upstream of the feature along a flowing direction of the refrigerant in the branch during operation of the branch. Similarly, a part of a branch after a feature may be understood as a part of the branch located downstream of the feature along a flowing direction of the refrigerant in the branch during operation of the branch.

In view of the above, a temperature of the first temperature region 251 is higher than a temperature of the second temperature region 252, and the temperature of the second temperature region 252 is higher than a temperature of the third temperature region 253, so that the first temperature region 251 is formed as a high-temperature region, the second temperature region 252 is formed as a medium-temperature region, and the third temperature region 253 is formed as a low-temperature region. Centralized arrangement of branch parts with corresponding temperatures of the third pipeline R3 and the fourth pipeline R4 can be implemented according to the temperatures of the refrigerants in the first branch R31, the second branch R32, and the third branch R41, which helps to reduce an amount of heat transferred by the high-temperature refrigerant to the medium-temperature refrigerant or the low-temperature refrigerant, thereby ensuring the performance of the vehicle thermal management system 100.

In some embodiments, as shown in FIG. 1 to FIG. 3, the valve group is further configured to control connection and disconnection of the first branch R31. In this case, the valve group may implement connection and disconnection of the third pipeline R3 by controlling the connection and disconnection of the first branch R31. In the first state, the first branch R31 is disconnected, and in the second state, the first branch R31 is connected.

For example, in the examples of FIG. 1 to FIG. 3, the valve group includes a third control valve 73. The third control valve 73 is connected in series to the first branch R31. In this case, the third control valve 73 can control connection and disconnection of the first branch R31.

In some embodiments of the present disclosure, as shown in FIG. 1 to FIG. 3, the vehicle thermal management system 100 further includes a liquid storage tank 9. The liquid storage tank 9 is connected in series to the first common branch R30. During operation of a refrigerant circulation flow path whose formation involving participation of the first common branch R30, because when a working condition changes or a system corresponding to the refrigerant circulation flow path is adjusted, the refrigerant in the system may be returned to the liquid storage tank 9, to stabilize an amount of circulation of the refrigerant in the system, normal operation of the system is ensured. In addition, when a specific part of the system malfunctions and needs to be overhauled, the refrigerant in the system may be collected into the liquid storage tank 9 through a specific operation, to avoid waste caused by outflowing of a large amount of refrigerant.

As shown in FIG. 1 to FIG. 3, the vehicle thermal management system 100 further includes a first heat exchange apparatus 10. The first heat exchange apparatus 10 has a heat exchange flow path. The heat exchange flow path is connected in series to a first common branch R30. In this case, the refrigerant flowing through the first common branch R30 may continue to exchange heat at the first heat exchange apparatus 10, which facilitates implementing secondary heat exchange of the refrigerant in a first refrigerant circulation flow path before flowing through the first throttling element 5 while implementing secondary heat exchange of the refrigerant in a second refrigerant circulation flow path before flowing through the second throttling element 6, which is conducive to improving performance of the vehicle thermal management system 100, and improving cooling efficiency and heating efficiency.

In the examples of FIG. 1 to FIG. 3, the vehicle thermal management system 100 includes a liquid storage tank 9 and a first heat exchange apparatus 10. In a flowing direction of the refrigerant in a first common branch R30, the liquid storage tank 9 is located upstream of the first heat exchange apparatus 10. In this case, the refrigerant in the first common branch R30 first flows through the liquid storage tank 9 and then flows through the first heat exchange apparatus 10.

In some embodiments of the present disclosure, as shown in FIG. 1 to FIG. 3, the second pipeline R2 and the fifth pipeline R5 have a second common branch R20. The second common branch R20 has a third end R20a and a fourth end R20b. The fourth end R20b of the second common branch R20 is in communication with the air inlet 1a. The refrigerant in the second common branch R20 flows to the compressor 1.

The second pipeline R2 further includes a fifth branch R21. The fifth branch R21 is in communication with the one end 3a of the external heat exchanger 3 and the third end R20a of the second common branch R20. The fifth pipeline R5 further includes a sixth branch R51. The sixth branch R51 is in communication with another end 4b of the second internal heat exchanger 4 and the third end R20a of the second common branch R20.

Therefore, while ensuring normal use of the second pipeline R2 and the fifth pipeline R5, the second pipeline R2 and the fifth pipeline R5 are arranged to share the second common branch R20, which helps to save pipeline lengths of the second pipeline R2 and the fifth pipeline R5 and facilitates arrangement of the second pipeline R2 and the fifth pipeline R5.

For example, the valve group is configured to control connection and disconnection of the fifth branch R21. In this case, the valve group may implement connection and disconnection of the second pipeline R2 by controlling the connection and disconnection of the fifth branch R21. In the first state, the fifth branch R21 is disconnected, so that the second pipeline R2 is disconnected, and in the second state, the fifth branch R21 is connected, which facilitates the implementation of the connection of the second pipeline R2.

For example, in the examples of FIG. 1 to FIG. 3, the valve group includes a second control valve 72. The second control valve 72 is connected in series to the fifth branch R21. In this case, the second control valve 72 can control connection and disconnection of the fifth branch R21.

In some embodiments of the present disclosure, as shown in FIG. 10 to FIG. 16, the fifth branch R21 and the sixth branch R51 are each formed in the integrated module 25. In other words, the fifth branch R21 and the sixth branch R51 are respectively defined in the integrated module 25. The second common branch R20 is arranged outside the integrated module 25. In other words, the second common branch R20 is not defined in the integrated module 25, to help to arrange another component on the second common branch R20, to further improve performance of the vehicle thermal management system 100.

In some embodiments of the present disclosure, as shown in FIG. 10 to FIG. 15, the integrated module 25 is internally divided into a first temperature region 251, a second temperature region 252, and a third temperature region 253. The fifth branch R21 is located in the first temperature region 251, and the sixth branch R51 is located in the third temperature region 253.

In view of the above, a temperature of the first temperature region 251 is higher than a temperature of the third temperature region 253, so that the first temperature region 251 is formed as a high-temperature region, and the third temperature region 253 is formed as a low-temperature region. Centralized arrangement of branch parts with corresponding temperatures of the second pipeline R2 and the fifth pipeline R5 can be implemented according to the temperatures of the refrigerants in the fifth branch R21 and the sixth branch R51, which helps to reduce an amount of heat transferred by the high-temperature refrigerant to the low-temperature refrigerant, thereby ensuring the performance of the vehicle thermal management system 100.

In some embodiments of the present disclosure, as shown in FIG. 1 to FIG. 3, the third pipeline R3 and the fourth pipeline R4 have a first common branch R30. In this case, regardless of whether the third pipeline R3 or the fourth pipeline R4 is connected, the refrigerant flows through the first common branch R30, which helps to save pipeline lengths of the third pipeline R3 and the fourth pipeline R4 and facilitates arrangement of pipelines. On the third pipeline R3, the first common branch R30 is located upstream of the second throttling element 6. In this case, the first common branch R30 is connected to an end of the second throttling element 6 away from the external heat exchanger 3, so that the first common branch R30 and the external heat exchanger 3 are respectively connected to two ends of the second throttling element 6. On the fourth pipeline R4, the first common branch R30 is located upstream of the first throttling element 5. In this case, the first common branch R30 is connected to an end of the first throttling element 5 away from the second internal heat exchanger 4, so that the first common branch R30 and the second internal heat exchanger 4 are respectively connected to two ends of the first throttling element 5.

The vehicle thermal management system 100 further includes a first heat exchange apparatus 10. The first heat exchange apparatus 10 has a first heat exchange flow path 10a and a second heat exchange flow path 10b exchanging heat with each other. The first heat exchange flow path 10a is connected in series to a first common branch R30, and the second heat exchange flow path 10b is connected in series to a second common branch R20. In this case, the refrigerant flowing through the first common branch R30 and the refrigerant flowing through the second common branch R20 may exchange heat at the first heat exchange apparatus 10, which facilitates implementing secondary heat exchange of the refrigerant in the first refrigerant circulation flow path before flowing through the first throttling element 5 while implementing secondary heat exchange of the refrigerant in the second refrigerant circulation flow path before flowing through the second throttling element 6. In addition, during secondary heat exchange of the refrigerants, the refrigerant before flowing the throttling element exchanges heat with the refrigerant finally flowing to the compressor 1 in the refrigerant circulation path, to help to continue converting the unevaporated refrigerant in the refrigerant flowing to the compressor 1 into a gaseous refrigerant, which is conducive to effectively improving performance, cooling efficiency, and heating efficiency of the vehicle thermal management system 100, and is conducive to saving fuel consumption and power consumption of the vehicle 200.

In some embodiments, as shown in FIG. 1, the vehicle thermal management system 100 further includes a liquid storage tank 9. The liquid storage tank 9 is connected in series to the first common branch R30, and the liquid storage tank 9 is located upstream of the first heat exchange flow path 10a. During operation of a refrigerant circulation flow path whose formation involving participation of the first common branch R30, because when a working condition changes or a system corresponding to the refrigerant circulation flow path is adjusted, the refrigerant in the system may be returned to the liquid storage tank 9, to stabilize an amount of circulation of the refrigerant in the system, normal operation of the system is ensured. In addition, when a specific part of the system malfunctions and needs to be overhauled, the refrigerant in the system may be collected into the liquid storage tank 9 through a specific operation, to avoid waste caused by outflowing of a large amount of refrigerant.

In some embodiments, as shown in FIG. 2 and FIG. 3, the vehicle thermal management system 100 has a cabin-only cooling mode and an air source heat pump heating mode. In the cabin-only cooling mode, as shown in FIG. 2, the first pipeline R1, the fourth pipeline R4, and the fifth pipeline R5 are all connected, and the second pipeline R2 and the third pipeline R3 are all disconnected, to lower a temperature of the cabin. In the air source heat pump heating mode, the second pipeline R2 and the third pipeline R3 are all connected, and the first pipeline R1 and the fourth pipeline R4 are all disconnected, to raise a temperature of the cabin, thereby implementing heating.

In some embodiments of the present disclosure, as shown in FIG. 1, FIG. 4, and FIG. 5, the vehicle thermal management system 100 further includes a battery heat exchanger 11 and a third throttling element 12. The battery heat exchanger 11 may exchange heat with a cell or a battery module in a battery pack of the vehicle 200, to control a temperature of the cell or the battery module within a proper range, thereby ensuring normal operation of the battery pack. The battery heat exchanger 11 has one end 11a selectively in communication with the air inlet 1a through a sixth pipeline R6. In this case, when the sixth pipeline R6 is connected, the heat-exchanged refrigerant in the battery heat exchanger 11 may flow to the compressor 1 through the sixth pipeline R6. When the sixth pipeline R6 is disconnected, circulation of the refrigerant cannot be implemented between the battery heat exchanger 11 and the compressor 1 through the sixth pipeline R6. The battery heat exchanger 11 has another end 11b selectively in communication with the other end 3b of the external heat exchanger 3 through a seventh pipeline R7. In this case, when the seventh pipeline R7 is connected, circulation of the refrigerant can be implemented between the battery heat exchanger 11 and the external heat exchanger 3 through the seventh pipeline R7. When the seventh pipeline R7 is disconnected, circulation of the refrigerant cannot be implemented between the battery heat exchanger 11 and the external heat exchanger 3 through the seventh pipeline R7.

The third throttling element 12 is connected in series to the seventh pipeline R7. In this case, the third throttling element 12 can throttle and decompress the refrigerant in the seventh pipeline R7. To be specific, the refrigerant flowing out from the external heat exchanger 3 passes through the seventh pipeline R7 and flows through the third throttling element 12 to the battery heat exchanger 11, to exchange heat at the battery heat exchanger 11, and then flow to the compressor 1 through the sixth pipeline R6 for a next circulation.

In view of the above, the compressor 1, the first internal heat exchanger 2, the first pipeline R1, the external heat exchanger 3, the seventh pipeline R7, the battery heat exchanger 11, and the sixth pipeline R6 may constitute a third refrigerant circulation flow path. The first internal heat exchanger 2 and the external heat exchanger 3 may each be used as a condenser, and the battery heat exchanger 11 may be used as an evaporator. In this case, the battery heat exchanger 11 may implement cooling of a cell or a battery module.

Therefore, for the first refrigerant circulation flow path and the third refrigerant circulation flow path, in the entire vehicle thermal management system 100, a flow path formed by connecting the battery heat exchanger 11 and the third throttling element 12 in series and a flow path formed by connecting the second internal heat exchanger 4 and the first throttling element 5 in series are arranged in parallel connection, to further enrich operation modes of the vehicle thermal management system 100.

For example, in addition to the cabin-only cooling mode, the vehicle thermal management system 100 may further have a battery-only cooling mode and a cabin-battery-dual cooling mode.

In the battery-only cooling mode (shown in FIG. 4), the valve group switches to the first state, a flow path formed by connecting the second internal heat exchanger 4 and the first throttling element 5 in series is disconnected (for example, the flow path is provided with a switch valve, or the first throttling element 5 is a throttling element with an adjustable opening degree, which can each implement connection and disconnection of the flow path), and a flow path formed by connecting the battery heat exchanger 11 and the third throttling element 12 in series is connected. In this case, after being compressed in the compressor 1, the refrigerant flows out from the air outlet 1b of the compressor 1 to the first internal heat exchanger 2, to exchange heat. The heat-exchanged refrigerant flows through the first pipeline R1 to the external heat exchanger 3, to exchange heat. The heat-exchanged refrigerant passes through the seventh pipeline R7 and flows through the third throttling element 12 to the battery heat exchanger 11, to exchange heat. The heat-exchanged refrigerant flows through the sixth pipeline R6 to the air inlet 1a of the compressor 1 to complete a circulation.

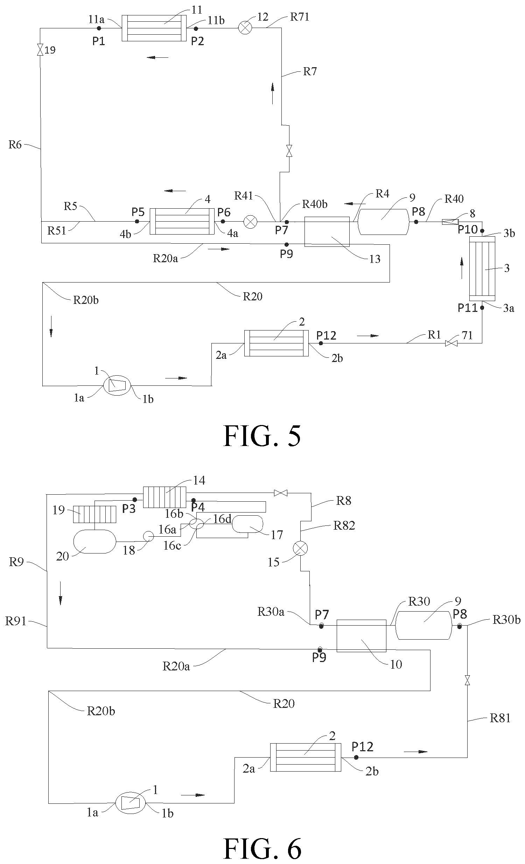

In the cabin-battery-dual cooling mode (shown in FIG. 5), the valve group switches to the first state, a flow path formed by connecting the second internal heat exchanger 4 and the first throttling element 5 in series is connected, and a flow path formed by connecting the battery heat exchanger 11 and the third throttling element 12 in series is connected. In this case, after being compressed in the compressor 1, the refrigerant flows out from the air outlet 1b of the compressor 1 to the first internal heat exchanger 2, to exchange heat. The heat-exchanged refrigerant flows through the first pipeline R1 to the external heat exchanger 3, to exchange heat. One part of the heat-exchanged refrigerant passes through the seventh pipeline R7 and flows through the third throttling element 12 to the battery heat exchanger 11, to exchange heat, and the other part thereof passes through the fourth pipeline R4 and flows through the first throttling element 5 to the second internal heat exchanger 4, to exchange heat. The heat-exchanged refrigerants in the battery heat exchanger 11 and the second internal heat exchanger 4 flow to the air inlet 1a of the compressor 1 to complete a circulation.

In the cabin-only cooling mode (shown in FIG. 1), the valve group switches to the first state, a flow path formed by connecting the second internal heat exchanger 4 and the first throttling element 5 in series is connected, and a flow path formed by connecting the battery heat exchanger 11 and the third throttling element 12 in series is disconnected (for example, the flow path is provided with an switch valve, or the third throttling element 12 is a throttling element with an adjustable opening degree, which can each implement connection and disconnection of the flow path). A flowing direction of the refrigerant has been described above. Details are not described herein again.

Optionally, the battery heat exchanger 11 is a direct cooling heat exchanger. At least a part of a heat exchange flow path of the battery heat exchanger 11 is arranged in a battery pack, to implement direct heat exchange between the heat exchange flow path and a cell or a battery module. Compared with some technologies in which primary heat exchange is first performed by using a refrigerant and a coolant, and secondary heat exchange is then performed between the coolant and a cell or a battery module, to cause the refrigerant to exchange heat with the cell or the battery module indirectly through the coolant, the foregoing manner of the present disclosure helps to improve a cooling rate of the vehicle thermal management system 100 for a cell or a battery module, which is conducive to saving fuel consumption and power consumption.

In some embodiments of the present disclosure, as shown in FIG. 1, FIG. 4, and FIG. 5, the seventh pipeline R7 and the fourth pipeline R4 have a third common branch R40. The third common branch R40 has a fifth end R40a and a sixth end R40b. The fifth end R40a of the third common branch R40 is in communication with the other end 3b of the external heat exchanger 3.

The seventh pipeline R7 further includes a seventh branch R71. The seventh branch R71 is in communication with the other end 11b of the battery heat exchanger 11 and the sixth end R40b of the third common branch R40. The third throttling element 12 is connected in series to the seventh branch R71. The fourth pipeline R4 further includes a third branch R41. The third branch R41 is in communication with the one end 4a of the second internal heat exchanger 4 and the sixth end R40b of the third common branch R40. The first throttling element 5 is connected in series to the third branch R41.

Therefore, while ensuring normal use of the seventh pipeline R7 and the fourth pipeline R4, the seventh pipeline R7 and the fourth pipeline R4 are arranged to share the third common branch R40, which helps to save pipeline lengths of the fourth pipeline R4 and the seventh pipeline R7 and facilitates arrangement of the fourth pipeline R4 and the seventh pipeline R7.

In view of the above, on the fourth pipeline R4, the third common branch R40 is located upstream of the first throttling element 5. In this case, the third common branch R40 is connected to an end of the first throttling element 5 away from the second internal heat exchanger 4, so that the third common branch R40 and the second internal heat exchanger 4 are respectively connected to two ends of the first throttling element 5. In addition, on the seventh pipeline R7, the third common branch R40 is located upstream of the third throttling element 12. In this case, the third common branch R40 is connected to an end of the third throttling element 12 away from the battery heat exchanger 11, so that the third common branch R40 and the battery heat exchanger 11 are respectively connected to two ends of the third throttling element 12.

Optionally, in the examples in FIG. 1, FIG. 4, and FIG. 5, when the third pipeline R3 and the fourth pipeline R4 have a first common branch R30, the first common branch R30 and the third common branch R40 may have a part shared. Certainly, the first common branch R30 and the third common branch R40 may alternatively have no part shared.

In some embodiments of the present disclosure, as shown in FIG. 10 to FIG. 16, a part of an upstream of the third common branch R40, a seventh branch R71, and a third branch R41 are each formed in the integrated module 25. In other words, the part of the upstream of the third common branch R40, a seventh branch R71, and a third branch R41 are respectively defined in the integrated module 25. In this case, proper integrated arrangement helps to simplify connections of pipelines.

In some embodiments of the present disclosure, as shown in FIG. 10 to FIG. 15, the integrated module 25 is internally divided into a first temperature region 251, a second temperature region 252, and a third temperature region 253. A part of an upstream of the third common branch R40 is located in the first temperature region 251 and the second temperature region 252. A part of the third branch R41 before the first throttling element 5 and the second branch R32 are each located in the second temperature region 252. A part of the third branch R41 after the first throttling element 5 is located in the third temperature region 253. A part of the seventh branch R71 before the third throttling element 12 is located in the second temperature region 252. A part of the seventh branch R71 after the third throttling element 12 is located in the third temperature region 253.

In view of the above, a temperature of the first temperature region 251 is higher than a temperature of the second temperature region 252, and the temperature of the second temperature region 252 is higher than a temperature of the third temperature region 253, so that the first temperature region 251 is formed as a high-temperature region, the second temperature region 252 is formed as a medium-temperature region, and the third temperature region 253 is formed as a low-temperature region. Centralized arrangement of branch parts with corresponding temperatures of the seventh pipeline R7 and the fourth pipeline R4 can be implemented according to the temperatures of the refrigerants in the third common branch R40, the seventh branch R71, and the third branch R41, which helps to reduce an amount of heat transferred by the high-temperature refrigerant to the medium-temperature refrigerant or the low-temperature refrigerant, thereby ensuring the performance of the vehicle thermal management system 100.

In some embodiments of the present disclosure, as shown in FIG. 1, FIG. 4, and FIG. 5, the sixth pipeline R6 and the fifth pipeline R5 have a second common branch R20. The second common branch R20 has a third end R20a and a fourth end R20b. The fourth end R20b of the second common branch R20 is in communication with the air inlet 1a. The refrigerant in the second common branch R20 may flow to the compressor 1.

The vehicle thermal management system 100 further includes a second heat exchange apparatus 13. The second heat exchange apparatus 13 has a third heat exchange flow path 13a and a fourth heat exchange flow path 13b exchanging heat with each other. The third heat exchange flow path 13a is connected in series to a third common branch R40, and the fourth heat exchange flow path 13b is connected in series to a second common branch R20. In this case, the refrigerant flowing through the third common branch R40 and the refrigerant flowing through the second common branch R20 may exchange heat at the second heat exchange apparatus 13, which facilitates implementing secondary heat exchange of the refrigerant in the first refrigerant circulation flow path before flowing through the first throttling element 5 while implementing secondary heat exchange of the refrigerant in the third refrigerant circulation flow path before flowing through the third throttling element 12. In addition, during secondary heat exchange of the refrigerants, the refrigerant before flowing the throttling element exchanges heat with the refrigerant finally flowing to the compressor 1 in the refrigerant circulation path, to help to continue converting the unevaporated refrigerant in the refrigerant flowing to the compressor 1 into a gaseous refrigerant, which is conducive to effectively improving performance, cooling efficiency, and heating efficiency of the vehicle thermal management system 100, and is conducive to saving fuel consumption and power consumption of the vehicle.

Optionally, in the examples in FIG. 1, FIG. 4, and FIG. 5, when the first common branch R30 and the third common branch R40 have a part shared, the first heat exchange apparatus 10 and the second heat exchange apparatus 13 are the same heat exchange apparatus.

In some embodiments of the present disclosure, as shown in FIG. 4 and FIG. 5, the vehicle thermal management system 100 further has a battery-only cooling mode and a cabin-battery-dual cooling mode. In the battery-only cooling mode, as shown in FIG. 4, the first pipeline R1, the sixth pipeline R6, and the seventh pipeline R7 are all connected. In the cabin-battery-dual cooling mode, as shown in FIG. 5, the first pipeline R1, the fourth pipeline R4, the fifth pipeline R5, the sixth pipeline R6, and the seventh pipeline R7 are all connected.

In some embodiments of the present disclosure, as shown in FIG. 1, FIG. 6, and FIG. 7, the vehicle thermal management system 100 further includes a second system 100b. The second system 100b includes an engine cooling jacket 17, a drive pump 18, and a heater core 19 being in communication through a first circulation pipeline 100c. The second system 100b may be filled with a heat exchange medium such as water, to facilitate heat transfer through the heat exchange medium.

The vehicle thermal management system 100 further includes a third heat exchange apparatus 14 and a fourth throttling element 15. The third heat exchange apparatus 14 has a fifth heat exchange flow path 14a and a sixth heat exchange flow path 14b exchanging heat with each other. The fifth heat exchange flow path 14a is connected in series to the first circulation pipeline 100c and located downstream of the heater core 19. The sixth heat exchange flow path 14b has one end selectively in communication with the other end 2b of the first internal heat exchanger 2 through an eighth pipeline R8. In this case, when the eighth pipeline R8 is connected, circulation of the refrigerant between the sixth heat exchange flow path 14b and the first internal heat exchanger 2 can be implemented through the eighth pipeline R8, and when the eighth pipeline R8 is disconnected, circulation of the refrigerant between the sixth heat exchange flow path 14b and the first internal heat exchanger 2 cannot be implemented through the eighth pipeline R8. The sixth heat exchange flow path 14b has another end in communication with the air inlet 1a through a ninth pipeline R9. The fourth throttling element 15 is connected in series to the eighth pipeline R8. In this case, the fourth throttling element 15 can throttle and decompress the refrigerant in the eighth pipeline R8. Therefore, the refrigerant discharged from the compressor 1 passes through the first internal heat exchanger 2 to exchange heat. The refrigerant flowing out from the first internal heat exchanger 2 passes through the eighth pipeline R8 and flows to the sixth heat exchange flow path 14b after passing through the fourth throttling element 15, to exchange heat with a heat exchange medium in the second system 100b. The heat-exchanged refrigerant may flow to the compressor 1 through the ninth pipeline R9 for a next circulation.

In view of the above, the compressor 1, the first internal heat exchanger 2, the eighth pipeline R8, the fourth throttling element 15, the third heat exchange apparatus 14, and the ninth pipeline R9 may constitute a fourth refrigerant circulation flow path. The first internal heat exchanger 2 may be used as a condenser, to heat the cabin. The third heat exchange apparatus may be used as an evaporator, to lower a temperature of the heat exchange medium flowing through the sixth heat exchange flow path 14b. In addition, the second system 100b may utilize the waste heat of the engine to heat the cabin. In this way, operation modes of the vehicle thermal management system 100 are further enriched, and in addition, are more economical and more energy-saving.

For example, an example in which the heat exchange medium in the second system 100b is water is used for description. The vehicle thermal management system 100 may have a water source heat pump heating mode. In the water source heat pump heating mode (shown in FIG. 6), the first pipeline R1 and the third pipeline R3 are all disconnected. In this case, after being compressed in the compressor 1, the refrigerant flows out from the air outlet 1b of the compressor 1 to the first internal heat exchanger 2, to exchange heat. The heat-exchanged refrigerant passes through the eighth pipeline R8 and flows through the fourth throttling element 15 to the third heat exchange apparatus 14, to exchange heat. The heat-exchanged refrigerant flows through the ninth pipeline R9 to the air inlet 1a of the compressor 1 to complete a circulation. At the same time, the drive pump 18 drives water in the second system 100b to circulate. When flowing through the engine cooling jacket 17, the water may remove heat from the engine, and when flowing to the heater core 19, the water exchanges heat with an air flow passing through the heater core 19, to raise a temperature of the air flow and heat the cabin. The water flowing out from the heater core 19 flows toward the fifth heat exchange flow path 14a to exchange heat with the refrigerant in the fourth refrigerant circulation flow path, to lower the temperature of the water, so that the water removes heat from the engine in time again, thereby facilitating recovery of waste heat of the engine.

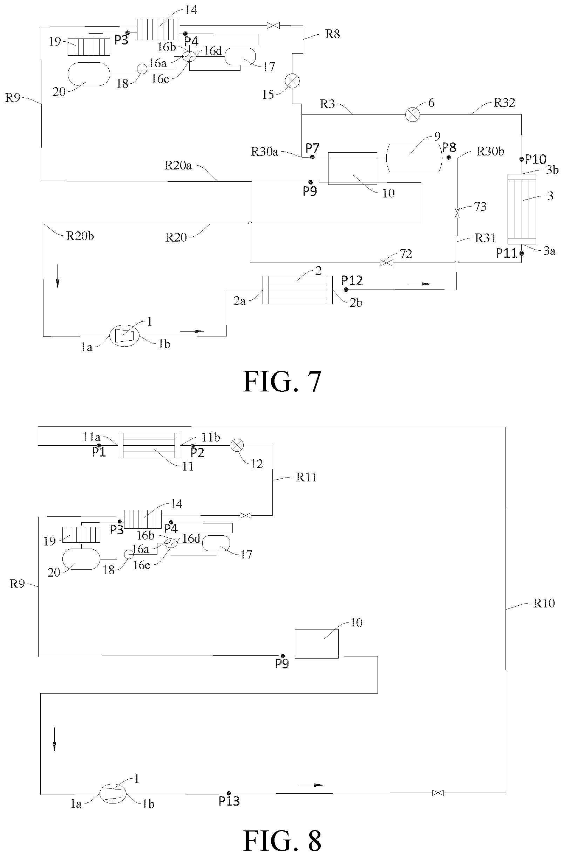

Certainly, the vehicle thermal management system 100 may further have an air source-water source-combined heat pump heating mode (shown in FIG. 7). The valve group switches to the second state, and the third pipeline R3 is connected. In this case, after being compressed in the compressor 1, the refrigerant flows out from the air outlet 1b of the compressor 1 to the first internal heat exchanger 2, to exchange heat. One part of the heat-exchanged refrigerant passes through the third pipeline R3 and flows through the second throttling element 6 to the external heat exchanger 3, to exchange heat. The other part of the refrigerant passes through the eighth pipeline R8 and flows through the fourth throttling element 15 to the third heat exchange apparatus 14 to exchange heat. The heat-exchanged refrigerants in the external heat exchanger 3 and the third heat exchange apparatus 14 flow to the air inlet 1a of the compressor 1 to complete a circulation. In addition, the second system 100b may also utilize the heat of the engine to heat the cabin.

In some embodiments of the present disclosure, as shown in FIG. 1, FIG. 6, and FIG. 7, the eighth pipeline R8 and the fourth pipeline R4 have a first common branch R30. The first common branch R30 has a first end R30a and a second end R30b.

The fourth pipeline R4 further includes a third branch R41 and a fourth branch R42. The third branch R41 is in communication with the one end 4a of the second internal heat exchanger 4 and the first end R30a of the first common branch R30. The first throttling element 5 is connected in series to the third branch R41. The fourth branch R42 is in communication with the other end 3b of the external heat exchanger 3 and the second end R30b of the first common branch R30. The eighth pipeline R8 further includes an eighth branch R81 and a ninth branch R82. The eighth branch R81 is in communication with the other end 2b of the first internal heat exchanger 2 and the second end R30b. The ninth branch R82 is in communication with the first end R30a and the one end of the sixth heat exchange flow path 14b.

Therefore, while ensuring normal use of the fourth pipeline R4 and the eighth pipeline R8, the fourth pipeline R4 and the eighth pipeline R8 are arranged to share the first common branch R30, which helps to save pipeline lengths of the fourth pipeline R4 and the eighth pipeline R8 and facilitates arrangement of the fourth pipeline R4 and the eighth pipeline R8.

As shown in FIG. 1, FIG. 6, and FIG. 7, a check valve 8 is arranged in series on the fourth branch R42. An inlet end of the check valve 8 is in communication with the foregoing other end 3b of the external heat exchanger 3, and an outlet end of the check valve 8 is in communication with the second end R30b of the first common branch R30. In this case, the refrigerant in the fourth branch R42 can only flow from the foregoing other end 3b of the external heat exchanger 3 toward the second end R30b of the first common branch R30, to help to prevent the refrigerant in the first branch R31 from directly flowing to the external heat exchanger 3 through the fourth branch R42 when the valve group switches to the second state, to ensure that the refrigerant in the first branch R31 passes through the first common branch R30 and the second branch R32, and then flows to the external heat exchanger 3 after passing through the second throttling element 6, thereby ensuring normal operation of the second refrigerant circulation flow path, so that the vehicle thermal management system 100 can implement air source heat pump heating.

In some embodiments of the present disclosure, as shown in FIG. 10 to FIG. 16, the third branch R41, the eighth branch R81, and the ninth branch R82 are each formed in the integrated module 25. In other words, the third branch R41, the eighth branch R81, and the ninth branch R82 are respectively defined in the integrated module 25. The fourth branch R42 and the first common branch R30 are each arranged outside the integrated module 25. In other words, the fourth branch R42 and the first common branch R30 are not defined in the integrated module 25, to help to arrange another component on the first common branch R30, to further improve performance of the vehicle thermal management system 100.

In some embodiments of the present disclosure, as shown in FIG. 10 to FIG. 15, the integrated module 25 is internally divided into a first temperature region 251, a second temperature region 252, and a third temperature region 253. A part of the third branch R41 before the first throttling element 5 and the second branch R32 are each located in the second temperature region 252. A part of the third branch R41 after the first throttling element 5 is located in the third temperature region 253. The eighth branch R81 is located in the first temperature region 251. The ninth branch R82 is located in the second temperature region 252.

In view of the above, a temperature of the first temperature region 251 is higher than a temperature of the second temperature region 252, and the temperature of the second temperature region 252 is higher than a temperature of the third temperature region 253, so that the first temperature region 251 is formed as a high-temperature region, the second temperature region 252 is formed as a medium-temperature region, and the third temperature region 253 is formed as a low-temperature region. Centralized arrangement of branch parts with corresponding temperatures of the fourth pipeline R4 and the eighth pipeline R8 can be implemented according to the temperatures of the refrigerants in the third branch R41, the fourth branch R42, the eighth branch R81, and the ninth branch R82, which helps to reduce an amount of heat transferred by the high-temperature refrigerant to the medium-temperature refrigerant or the low-temperature refrigerant, thereby ensuring the performance of the vehicle thermal management system 100.

In some embodiments of the present disclosure, as shown in FIG. 1, FIG. 6, and FIG. 7, the ninth pipeline R9 and the fifth pipeline R5 have a second common branch R20. The second common branch R20 has a third end R20a and a fourth end R20b. The fourth end R20b of the second common branch R20 is in communication with the air inlet 1a. The fifth pipeline R5 further includes a sixth branch R51. The sixth branch R51 is in communication with the other end of the second internal heat exchanger 4 and the third end R20a of the second common branch R20. The ninth pipeline R9 further includes a tenth branch R91. The tenth branch R91 is in communication with the other end of the sixth heat exchange flow path 14b and the third end R20a of the second common branch R20.

Therefore, while ensuring normal use of the fifth pipeline R5 and the ninth pipeline R9, the fifth pipeline R5 and the ninth pipeline R9 are arranged to share the second common branch R20, which helps to save pipeline lengths of the fifth pipeline R5 and the ninth pipeline R9 and facilitates arrangement of the fifth pipeline R5 and the ninth pipeline R9.

Further, as shown in FIG. 1, FIG. 6, and FIG. 7, the eighth pipeline R8 and the fourth pipeline R4 have a first common branch R30, the ninth pipeline R9 and the fifth pipeline R5 have a second common branch R20. The vehicle thermal management system 100 further includes a first heat exchange apparatus 10. The first heat exchange apparatus 10 has a first heat exchange flow path 10a and a second heat exchange flow path 10b exchanging heat with each other. The first heat exchange flow path 10a is connected in series to the first common branch R30, and the second heat exchange flow path 10b is connected in series to the second common branch R20, to improve performance of the vehicle thermal management system 100.

In some embodiments of the present disclosure, as shown in FIG. 10 to FIG. 16, the sixth branch R51 and the tenth branch R91 are each formed in the integrated module 25. In other words, the sixth branch R51 and the tenth branch R91 are respectively defined in the integrated module 25. The second common branch R20 is arranged outside the integrated module 25. In other words, the second common branch R20 is not defined in the integrated module 25, to help to arrange another component on the second common branch R20, to further improve performance of the vehicle thermal management system 100.

In some embodiments of the present disclosure, as shown in FIG. 10 to FIG. 15, the integrated module 25 is internally divided into a first temperature region 251, a second temperature region 252, and a third temperature region 253. A part of an upstream of the sixth branch R51 is located in the third temperature region 253. A part of a downstream of the sixth branch R51 is located in the first temperature region 251. The tenth branch R91 is located in the first temperature region 251.

In view of the above, a temperature of the first temperature region 251 is higher than a temperature of the third temperature region 253, so that the first temperature region 251 is formed as a high-temperature region, and the third temperature region 253 is formed as a low-temperature region. Centralized arrangement of branch parts with corresponding temperatures of the fifth pipeline R5 and the ninth pipeline R9 can be implemented according to the temperatures of the refrigerants in the sixth branch R51 and the tenth branch R91, which helps to reduce an amount of heat transferred by the high-temperature refrigerant to the low-temperature refrigerant, thereby ensuring the performance of the vehicle thermal management system 100. In some embodiments of the present disclosure, as shown in FIG. 1, FIG. 6, and FIG. 7, the second system 100b further includes a reversing element 16 and an engine cooling jacket 17. The reversing element 16 is connected in series between the fifth heat exchange flow path 14a and the drive pump 18, and the reversing element 16 includes a first valve port 16a, a second valve port 16b, a third valve port 16c, and a fourth valve port 16d. The first valve port 16a is switchably in communication with one of the second valve port 16b and the third valve port 16c. The fourth valve port 16d is switchably in communication with the other of the second valve port 16b and the third valve port 16c. The first valve port 16a is in communication with the drive pump 18, and the second valve port 16b is in communication with the fifth heat exchange flow path 14a. The engine cooling jacket 17 is in communication with the third valve port 16c and the fourth valve port 16d respectively through a second circulation pipeline 100d.

In view of the above, when the first valve port 16a is in communication with the second valve port 16b, and the fourth valve port 16d is in communication with the third valve port 16c, a flow path among the engine cooling jacket 17, the second circulation pipeline 100d, and the third valve port 16c and the fourth valve port 16d of the reversing element 16 forms a closed circulation flow path. The engine cooling jacket 17 is not connected to the first circulation pipeline 100c, and water in the first circulation pipeline 100c cannot exchange heat with the engine cooling jacket 17. When the first valve port 16a is in communication with the third valve port 16c, and the fourth valve port 16d is in communication with the second valve port 16b, the engine cooling jacket 17 is connected to the first circulation pipeline 100c by the second circulation pipeline 100d, and the second circulation pipeline 100d is arranged in series connection with the first circulation pipeline 100c. Water in the first circulation pipeline 100c may exchange heat with the engine cooling jacket 17, to utilize heat of the engine. Therefore, in the water source heat pump heating mode or the air source-water source-combined heat pump heating mode, it is convenient to switch the reversing element 16 based on whether heat of the engine (for example, waste heat of the engine) is sufficient.

In some embodiments of the present disclosure, as shown in FIG. 1, FIG. 6, and FIG. 7, the second system 100b further includes an electric heater 20. The electric heater 20 is connected in series between the drive pump 18 and the heater core 19, and the electric heater 20 is located upstream of the heater core 19. The electric heater 20 may heat a heat exchange medium, such as water, that flows through the electric heater 20 on the first circulation pipeline 100c, to raise a temperature of an air flow flowing through the heater core 19, to warm the cabin.

Therefore, when the heat of the engine is insufficient, the second circulation pipeline 100d and the first circulation pipeline 100c may be disconnected, and the electric heater 20 may be turned on, to achieve heating. When the heat of the engine is sufficient, the electric heater 20 may be turned off, to save energy consumption.

In some embodiments of the present disclosure, as shown in FIG. 6 and FIG. 7, the vehicle thermal management system 100 further has a water source heat pump heating mode and an air source-water source-combined heat pump heating mode. In the water source heat pump heating mode, as shown in FIG. 6, the eighth pipeline R8 and the ninth pipeline R9 are all connected, and the drive pump 18 operates. In the air source-water source-combined heat pump heating mode, as shown in FIG. 7, the second pipeline R2, the third pipeline R3, the eighth pipeline R8, and the ninth pipeline R9 are all connected, and the first pipeline R1 and the fourth pipeline R4 are all disconnected.

In some embodiments of the present disclosure, as shown in FIG. 1, FIG. 8, and FIG. 9, the vehicle thermal management system 100 further includes a battery heat exchanger 11, a third heat exchange apparatus 14, a third throttling element 12, and a second system 100b. One end of the battery heat exchanger 11 is selectively in communication with the air outlet 1b through the tenth pipeline R10. In this case, when the tenth pipeline R10 is connected, the refrigerant compressed in the compressor 1 may flow to the battery heat exchanger 11 through the tenth pipeline R10, to heat a cell or a battery module of a battery pack. When the tenth pipeline R10 is disconnected, circulation of the refrigerant cannot be implemented between the battery heat exchanger 11 and the compressor 1 through the tenth pipeline R10. The third heat exchange apparatus 14 has a fifth heat exchange flow path 14a and a sixth heat exchange flow path 14b exchanging heat with each other. The sixth heat exchange flow path 14b has one end selectively in communication with another end of the battery heat exchanger 11 through an eleventh pipeline R11. In this case, if the eleventh pipeline R11 is connected, circulation of the refrigerant between the sixth heat exchange flow path 14b and the battery heat exchanger 11 may be implemented through the eleventh pipeline R11. If the eleventh pipeline R11 is disconnected, circulation of the refrigerant between the sixth heat exchange flow path 14b and the battery heat exchanger 11 cannot be implemented through the eleventh pipeline R11. The sixth heat exchange flow path 14b has another end in communication with the air inlet 1a through a ninth pipeline R9. The third throttling element 12 is connected in series to the eleventh pipeline R11. In this case, the third throttling element 12 can throttle and decompress the refrigerant in the eleventh pipeline R11.

The vehicle thermal management system 100 further includes a second system 100b. The second system 100b includes an engine cooling jacket 17, a drive pump 18, and a heater core 19 being in communication through a first circulation pipeline 100c. The fifth heat exchange flow path 14a is connected in series to the first circulation pipeline 100c, and the fifth heat exchange flow path 14a is located downstream of the heater core 19. The second system 100b may be filled with a heat exchange medium such as water, to facilitate heat transfer through the heat exchange medium. Therefore, the refrigerant discharged from the compressor 1 passes through the battery heat exchanger 11 to exchange heat. The refrigerant flowing out from the battery heat exchanger 11 passes through the eleventh pipeline R11 and flows to the sixth heat exchange flow path 14b after passing through the third throttling element 12, to exchange heat with a heat exchange medium in the second system 100b. The heat-exchanged refrigerant may flow to the compressor 1 through the ninth pipeline R9 for a next circulation.

In view of the above, the compressor 1, the tenth pipeline R10, the battery heat exchanger 11, the eleventh pipeline R11, the third throttling element 12, the third heat exchange apparatus 14, and the ninth pipeline R9 may constitute a fifth refrigerant circulation flow path. The battery heat exchanger 11 may be used as a condenser, to heat the battery. The third heat exchange apparatus 14 may be used as an evaporator, to lower a temperature of the heat exchange medium flowing through the sixth heat exchange flow path 14b. In addition, the second system 100b may utilize the heat of the engine to heat the cabin. In this way, operation modes of the vehicle thermal management system 100 are further enriched.

Optionally, at least a part of a heat exchange flow path of the battery heat exchanger 11 is arranged in a battery pack, to implement direct heat exchange between the heat exchange flow path and a cell or a battery module. Compared with some technologies in which primary heat exchange is first performed by using a refrigerant and a coolant, and secondary heat exchange is then performed between the coolant and a cell or a battery module, to cause the refrigerant to exchange heat with the cell or the battery module indirectly through the coolant, the foregoing manner of the present disclosure helps to improve a heating rate of the vehicle thermal management system 100 for a cell or a battery module, which is conducive to saving fuel consumption and power consumption.

For example, an example in which the heat exchange medium in the second system 100b is water is used for description. The vehicle thermal management system 100 may have a water source heat pump-battery heating mode. In the water source heat pump-battery heating mode (shown in FIG. 8), the first pipeline R1 and the third pipeline R3 are all disconnected. In this case, after being compressed in the compressor 1, the refrigerant flows out from the air outlet 1b of the compressor 1 to the battery heat exchanger 11, to exchange heat. The heat-exchanged refrigerant passes through the eleventh pipeline R11 and flows through the third throttling element 12 to the third heat exchange apparatus 14, to exchange heat. The heat-exchanged refrigerant flows through the ninth pipeline R9 to the air inlet 1a of the compressor 1 to complete a circulation. At the same time, the drive pump 18 drives water in the second system 100b to circulate. When flowing through the engine cooling jacket 17, the water may remove heat from the engine, and when flowing to the heater core 19, the water exchanges heat with an air flow passing through the heater core 19, to raise a temperature of the air flow and heat the cabin. The water flowing out from the heater core 19 flows toward the fifth heat exchange flow path 14a to exchange heat with the refrigerant in the fifth refrigerant circulation flow path, to lower the temperature of the water, so that the water removes heat from the engine in time again, thereby facilitating recovery of waste heat of the engine.

In some embodiments of the present disclosure, as shown in FIG. 10 to FIG. 16, the tenth pipeline R10 and the eleventh pipeline R11 are each formed in the integrated module 25. In other words, the tenth pipeline R10 and the eleventh pipeline R11 are respectively defined in the integrated module 25. Proper integrated arrangement of pipelines helps to simplify assembly.

In some embodiments of the present disclosure, as shown in FIG. 10 to FIG. 15, the integrated module 25 is internally divided into a first temperature region 251, a second temperature region 252, and a third temperature region 253. The tenth pipeline R10 and the eleventh pipeline R11 are each located in the first temperature region 251. A temperature difference between refrigerants in the tenth pipeline R10 and the eleventh pipeline R11 is small, which is convenient to ensure performance of the vehicle thermal management system 100.

For example, a temperature of the first temperature region 251 is higher than a temperature of the second temperature region 252, and the temperature of the second temperature region 252 is higher than a temperature of the third temperature region 253, so that the first temperature region 251 is formed as a high-temperature region, the second temperature region 252 is formed as a medium-temperature region, and the third temperature region 253 is formed as a low-temperature region. Centralized arrangement of branch parts with corresponding temperatures of the tenth pipeline R10 and the eleventh pipeline R11 can be implemented according to the temperatures of the refrigerants in the tenth pipeline R10 and the eleventh pipeline R11, which helps to reduce an amount of heat transferred by the high-temperature refrigerant to the medium-temperature refrigerant or the low-temperature refrigerant, thereby ensuring the performance of the vehicle thermal management system 100.

In some embodiments of the present disclosure, as shown in FIG. 8, the vehicle thermal management system 100 further has a water source heat pump-battery heating mode. In the water source heat pump-battery heating mode, as shown in FIG. 8, the ninth pipeline R9 and the tenth pipeline R10 are all connected, and the drive pump 18 operates.

In some embodiments of the present disclosure, as shown in FIG. 9, the one end of the sixth heat exchange flow path 14b further is in communication with the other end of the first internal heat exchanger 2 through an eighth pipeline R8. The vehicle thermal management system 100 further includes a fourth throttling element 15. The fourth throttling element 15 is connected in series to the eighth pipeline R8. The fourth throttling element 15 can throttle and decompress the refrigerant in the eighth pipeline R8. Therefore, the refrigerant discharged from the compressor 1 passes through the first internal heat exchanger 2 to exchange heat. The refrigerant flowing out from the first internal heat exchanger 2 passes through the eighth pipeline R8 and flows to the sixth heat exchange flow path 14b after passing through the fourth throttling element 15, to exchange heat with a heat exchange medium in the second system 100b. The heat-exchanged refrigerant may flow to the compressor 1 through the ninth pipeline R9 for a next circulation.

In view of the above, the compressor 1, the first internal heat exchanger 2, the eighth pipeline R8, the fourth throttling element 15, the third heat exchange apparatus 14, and the ninth pipeline R9 may constitute a fourth refrigerant circulation flow path. Therefore, the vehicle thermal management system 100 may further have a water source heat pump heating mode (which is similar to the foregoing water source heat pump heating mode, where details are not described herein again). Certainly, the vehicle thermal management system 100 may further have a water source heat pump heating-water source heat pump-battery heating combined mode (shown in FIG. 9). In this case, the first pipeline R1 and the third pipeline R3 are all disconnected. After the refrigerant is compressed in the compressor 1, one part of the refrigerant flows out from the air outlet 1b of the compressor 1 to the first internal heat exchanger 2, to exchange heat. The heat-exchanged refrigerant passes through the eighth pipeline R8, and flows through the fourth throttling element 15 to the third heat exchange apparatus 14, to exchange heat. The other part flows to the battery heat exchanger 11 to exchange heat. The heat-exchanged refrigerant passes through the eleventh pipeline R11 and flows through the third throttling element 12 to the third heat exchange apparatus 14. After exchanging heat in the third heat exchange apparatus 14, the refrigerant flows through the ninth pipeline R9 to the air inlet 1a of the compressor 1 to complete a circulation. At the same time, the drive pump 18 drives water in the second system 100b to circulate. When flowing through the engine cooling jacket 17, the water may remove heat from the engine, and when flowing to the heater core 19, the water exchanges heat with an air flow passing through the heater core 19, to raise a temperature of the air flow and heat the cabin. The water flowing out from the heater core 19 flows toward the fifth heat exchange flow path 14a to exchange heat with the refrigerant in the fourth refrigerant circulation flow path, to lower the temperature of the water, so that the water removes heat from the engine in time again.

In the water source heat pump heating-water source heat pump-battery heating combined mode, the first internal heat exchanger 2 and the battery heat exchanger 11 are arranged in parallel connection, to prevent the first internal heat exchanger 2 from releasing heat into the cabin with a low temperature, reduce heat loss, and improve a capability of heating a battery.

In some embodiments of the present disclosure, as shown in FIG. 9, the vehicle thermal management system 100 further has a water source heat pump heating-water source heat pump-battery heating combined mode. In the water source heat pump heating-water source heat pump-battery heating combined mode, as shown in FIG. 9, the eighth pipeline R8, the ninth pipeline R9, and the tenth pipeline R10 are all connected, and the drive pump 18 operates.

In some embodiments, as shown in FIG. 10 to FIG. 15, the integrated module 25 has at least one first mounting piece A1 and at least one second mounting piece A2. The first mounting piece A1 is configured to mount a throttling element (such as an electronic expansion valve) of the vehicle thermal management system 100, for example, at least one of the first throttling element 5, the second throttling element 6, the third throttling element 12, or the fourth throttling element 15 described above. The second mounting piece A2 is configured to mount a control valve of the vehicle thermal management system 100, for example, at least one of the first control valve 71, the second control valve 72, or the third control valve 73 described above, or a fourth control valve 21, a fifth control valve 22, a sixth control valve 23, or a seventh control valve 24 described below.

The fourth control valve 21 and the fourth throttling element 15 are arranged in parallel connection. The fifth control valve 22 is connected in series between the third heat exchange apparatus 14 and the fourth throttling element 15. The sixth control valve 23 is connected in series between one end 11a of the battery heat exchanger 11 and the other end 4b of the second internal heat exchanger 4. The sixth control valve 23 is connected in series between the one end 11a of the battery heat exchanger 11 and the third heat exchange apparatus 14. The seventh control valve 24 is connected in series between the air outlet 1b and the one end 11a of the battery heat exchanger 11. Optionally, the control valve in the present disclosure is a solenoid control valve.

For example, as shown in FIG. 10 to FIG. 15, a flow channel is defined on a valve seat 25. The flow channel includes multiple interfaces. The multiple interfaces include an interface P1, an interface P2, an interface P3, an interface P4, an interface P5, an interface P6, an interface P7, an interface P8, an interface P9, an interface P10, an interface P11, an interface P12, and an interface P13. The interface P1 and the interface P2 are respectively connected to two ends of the battery heat exchanger 11. The interface P3 and the interface P4 are respectively connected to two ends of the fifth heat exchange flow path 14a of the third heat exchange apparatus 14. The interface P5 and the interface P6 are respectively connected to two ends of the second internal heat exchanger 4. The interface P7 and the interface P8 are respectively connected to an end of the liquid storage tank 9 and an end of the first heat exchange apparatus 10 (the first heat exchange flow path 10a of the first heat exchange apparatus 10) away from each other. The interface P9 is connected to an end of the second heat exchange flow path 10b of the first heat exchange apparatus 10 away from the air inlet 1a. The interface P10 and the interface P11 are respectively connected to two ends of the external heat exchanger 3. The interface P12 is located on the first pipeline R1 and is connected to another end 2b of the second internal heat exchanger 2. The interface P13 is located on the tenth pipeline R10 and is connected to the air outlet 1b.

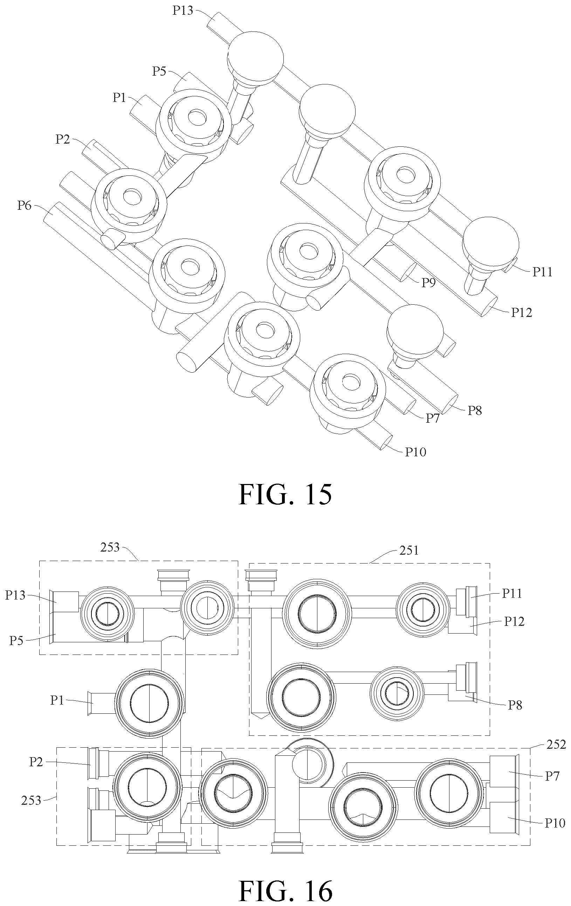

As shown in FIG. 15 and FIG. 16, the interface P1, the interface P2, the interface P5, the interface P6, and the interface P13 are each located on one side of the valve seat 25, the interface P7, the interface P8, the interface P9, the interface P10, the interface P11, and the interface P12 are located on another side of the valve seat 25. In this case, it is convenient for the valve seat 25 to have a first temperature region 251, a second temperature region 252, and a third temperature region 253. A temperature of a refrigerant in the first temperature region 251 is higher than a temperature of a refrigerant in the second temperature region 252. A temperature of the refrigerant in the second temperature region 252 is higher than a temperature of a refrigerant in the third temperature region 253. The first temperature region 251 and the second temperature region 252 are each located on the other side of the valve seat 25. Two third temperature regions 253 are provided and are each located on the one side of the valve seat 25.

In the cabin-only cooling mode, the battery-only cooling mode, and the cabin-battery-dual cooling mode, a high-temperature and high-pressure vapor refrigerant flows out from the first internal heat exchanger 2, flows into the integrated module through the interface P12, then, flows out from the integrated module through the interface P11, and enters the external heat exchanger 3. In this case, the high-temperature and high-pressure refrigerant passes through the external heat exchanger 3, to be condensed into a medium-temperature refrigerant. A first slot 25a, a second slot 25b, and a third slot 25c are formed on the valve seat 25. The third slot 25c is configured to space the two third temperature regions 253, to reduce heat transfer between the two third temperature regions 253. The second slot 25b is configured to space the first temperature region 251 and the second temperature region 252, to reduce heat transferred from the first temperature region 251 to the second temperature region 252. The first slot 25a is configured to space the first temperature region 251 and the third temperature region 253.

Therefore, the vehicle thermal management system 100 in the present disclosure is applicable to each vehicle model having not only cooling and heating requirements of the overall vehicle, but also cooling and heating requirements of the battery. The vehicle thermal management system 100 is provided with battery cooling and heating and a heat pump system (that is, the second system 100b described above) with a highly integrated engine water circuit. Each heat exchanger and each heat source are properly used to meet the heating and cooling requirements of the thermal management system of the overall vehicle under different working conditions in the most economic and energy-saving manner. Optionally, the heat exchange apparatus (for example, the battery heat exchanger 11 and the third heat exchange apparatus 14 described above) in the vehicle thermal management system 100 is a plate heat exchanger.

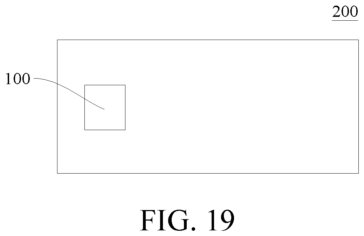

A vehicle 200 according to an embodiment of a second aspect of the present disclosure, as shown in FIG. 19, includes the vehicle thermal management system 100 according to the foregoing embodiment of the first aspect of the present disclosure.

For the vehicle 200 according to this embodiment of the present disclosure, the foregoing vehicle thermal management system 100 is adopted, which is conducive to improving experience of occupants.

Other configurations and operations of the vehicle 200 according to this embodiment of the present disclosure are known to a person of ordinary skill in the art and are not described herein in detail. Optionally, the vehicle 200 is a hybrid electric vehicle.

In the description of the present disclosure, it should be understood that, orientations or position relationships indicated by terms, such as "center", "longitudinal", "transverse", "length", "width", "thickness", "up", "down", "front", "back", "left", "right", "vertical", "horizontal", "top", "bottom", "in", "out", "clockwise", "counterclockwise", "axial", "radial", and "circumferential", are orientations or position relationships shown based on the accompanying drawings. These terms are merely for the convenience of describing the present disclosure and simplifying the description, and not to indicate or imply that the apparatus or element referred to needs to have a particular orientation, be constructed and operated in a particular orientation, and therefore cannot be understood as a limitation on the present disclosure Moreover, features modified by "first" and "second" may explicitly or implicitly include one or more features. In the description of the present disclosure, unless otherwise stated, "multiple" means two or more than two.

In the description of the present disclosure, it should be noted that, unless otherwise explicitly specified or defined, the terms such as "install", "connect", and "connection" should be understood in a broad sense. For example, the connection may be a fixed connection, a detachable connection, or an integral connection; or may be a mechanical connection or an electrical connection; or the connection may be a direct connection, an indirect connection through an intermediary, or internal communication between two components. A person of ordinary skill in the art may understand the specific meanings of the foregoing terms in the present disclosure according to specific situations.

In the description of this specification, the description of the reference terms, such as "an embodiment", "some embodiments", "exemplary embodiments", "example", "specific example", or "some examples", means that the specific features, structures, materials or characteristics described with reference to the embodiment or example are included in at least one embodiment or example of the present disclosure. In this specification, schematic descriptions of the foregoing terms do not necessarily indicate a same embodiment or example. Moreover, the specific features, structures, materials, or characteristics described may be combined in any one or more embodiments or examples in an appropriate manner.

Although the embodiments of the present disclosure have been shown and described, a person of ordinary skill in the art should understand that various changes, modifications, replacements and variations may be made to the embodiments without departing from the principles and purposes of the present disclosure, and the scope of the present disclosure is as defined by the appended claims and their equivalents.

## Claims

1. A vehicle thermal management system (100), comprising a first system (100a), the first system (100a) comprising:
a compressor (1), having an air inlet (1a) and an air outlet (1b);
a first internal heat exchanger (2), having one end in communication with the air outlet (1b) through a refrigerant pipeline (R); and
an external heat exchanger (3), having one end selectively in communication with another end of the first internal heat exchanger (2) through a first pipeline (R1), the one end of the external heat exchanger (3) being selectively in communication with the air inlet (1a) through a second pipeline (R2), and another end selectively in communication with the other end of the first internal heat exchanger (2) through a third pipeline (R3);
a second internal heat exchanger (4), having one end selectively in communication with the other end of the external heat exchanger (3) through a fourth pipeline (R4) and another end selectively in communication with the air inlet (1a) through a fifth pipeline (R5);
a first throttling element (5), connected in series to the fourth pipeline (R4);
a second throttling element (6), connected in series to the third pipeline (R3); and
an integrated module (25), at least a part of the first pipeline (R1), at least a part of the second pipeline (R2), at least a part of the third pipeline (R3), and at least a part of the fourth pipeline (R4) being each formed in the integrated module (25), and the first throttling element (5) and the second throttling element (6) being each arranged on the integrated module (25).

2. The vehicle thermal management system (100) according to claim 1, wherein the integrated module (25) is internally divided into a first temperature region (251), a second temperature region (252), and a third temperature region (253), the at least a part of the first pipeline (R1), the at least a part of the second pipeline (R2), and at least a part of an upstream of the third pipeline (R3) being each located in the first temperature region (251), at least a part of a downstream of the third pipeline (R3) and at least a part of a downstream of the fourth pipeline (R4) being each located in the second temperature region (252), and the at least a part of the downstream of the fourth pipeline (R4) being located in the third temperature region (253).

3. The vehicle thermal management system (100) according to claim 2, wherein a first slot (25a) and a second slot (25b) are formed on the integrated module (25), the first slot (25a) being provided between the first temperature region (251) and the third temperature region (253), and the second slot (25b) being provided between the first temperature region (251) and the second temperature region (252).

4. The vehicle thermal management system (100) according to any one of claims 1 to 3, wherein the third pipeline (R3) and the fourth pipeline (R4) have a first common branch (R30), the first common branch (R30) having a first end (R30a) and a second end (R30b);
the third pipeline (R3) further comprises a first branch (R31) and a second branch (R32), the first branch (R31) being in communication with the other end of the first internal heat exchanger (2) and the second end (R30b), the second branch (R32) being in communication with the first end (R30a) and the other end of the external heat exchanger (3), and the second throttling element (6) being connected in series to the second branch (R32); and
the fourth pipeline (R4) further comprises a third branch (R41) and a fourth branch (R42), the third branch (R41) being in communication with the one end of the second internal heat exchanger (4) and the first end (R30a), the first throttling element (5) being connected in series to the third branch (R41), the fourth branch (R42) being in communication with the other end of the external heat exchanger (3) and the second end (R30b), and a check valve (8) being arranged in series connection with the fourth branch (R42), and having an inlet end in communication with the other end of the external heat exchanger (3) and an outlet end in communication with the second end (R30b).

5. The vehicle thermal management system (100) according to claim 4, wherein the first branch (R31), the second branch (R32), and the third branch (R41) are each formed in the integrated module (25), and the fourth branch (R42) and the first common branch (R30) are each arranged outside the integrated module (25).

6. The vehicle thermal management system (100) according to claim 5, wherein the integrated module (25) is internally divided into a first temperature region (251), a second temperature region (252), and a third temperature region (253), the first branch (R31) being located in the first temperature region (251), the second branch (R32) and a part of the third branch (R41) before the first throttling element (5) being each located in the second temperature region (252), and a part of the third branch (R41) after the first throttling element (5) being located in the third temperature region (253).

7. The vehicle thermal management system (100) according to any one of claims 1 to 6, wherein the second pipeline (R2) and the fifth pipeline (R5) have a second common branch (R20), the second common branch (R20) having a third end (R20a) and a fourth end (R20b), the fourth end (R20b) of the second common branch (R20) being in communication with the air inlet (1a);
the second pipeline (R2) further comprises a fifth branch (R21), the fifth branch (R21) being in communication with the one end of the external heat exchanger (3) and the third end (R20a) of the second common branch (R20); and
the fifth pipeline (R5) further comprises a sixth branch (R51), the sixth branch (R51) being in communication with the other end of the second internal heat exchanger (4) and the third end (R20a) of the second common branch (R20).

8. The vehicle thermal management system (100) according to claim 7, wherein the fifth branch (R21) and the sixth branch (R51) are each formed in the integrated module (25), and the second common branch (R20) is arranged outside the integrated module (25).

9. The vehicle thermal management system (100) according to claim 8, wherein the integrated module (25) is internally divided into a first temperature region (251), a second temperature region (252), and a third temperature region (253), the fifth branch (R21) being located in the first temperature region (251), a part of an upstream of the sixth branch (R51) being located in the third temperature region (253), and a part of a downstream of the sixth branch (R51) being located in the first temperature region (251).

10. The vehicle thermal management system (100) according to any one of claims 7 to 9, wherein the third pipeline (R3) and the fourth pipeline (R4) have a first common branch (R30), on the third pipeline (R3), the first common branch (R30) being located upstream of the second throttling element (6), and on the fourth pipeline (R4), the first common branch (R30) being located upstream of the first throttling element (5); and
the vehicle thermal management system (100) further comprises:
a first heat exchange apparatus (10), having a first heat exchange flow path (10a) and a second heat exchange flow path (10b) exchanging heat with each other, the first heat exchange flow path (10a) being connected in series to the first common branch (R30), and the second heat exchange flow path (10b) being connected in series to the second common branch (R20).

11. The vehicle thermal management system (100) according to claim 10, further comprising a liquid storage tank (9), connected in series to the first common branch (R30), and located upstream of the first heat exchange flow path (10a).

12. The vehicle thermal management system (100) according to any one of claims 1 to 11, having:
a cabin-only cooling mode, in which the first pipeline (R1), the fourth pipeline (R4), and the fifth pipeline (R5) are all connected, and the second pipeline (R2) and the third pipeline (R3) are all disconnected; and
an air source heat pump heating mode, in which the second pipeline (R2) and the third pipeline (R3) are all connected, and the first pipeline (R1) and the fourth pipeline (R4) are all disconnected.

13. The vehicle thermal management system (100) according to any one of claims 1 to 12, further comprising:
a battery heat exchanger (11), having one end selectively in communication with the air inlet (1a) through a sixth pipeline (R6) and another end selectively in communication with the other end of the external heat exchanger (3) through a seventh pipeline (R7); and
a third throttling element (12), connected in series to the seventh pipeline (R7).

14. The vehicle thermal management system (100) according to claim 13, wherein the seventh pipeline (R7) and the fourth pipeline (R4) have a third common branch (R40), the third common branch (R40) having a fifth end (R40a) and a sixth end (R40b), the fifth end (R40a) of the third common branch (R40) being in communication with the other end of the external heat exchanger (3);
the seventh pipeline (R7) further comprises a seventh branch (R71), the seventh branch (R71) being in communication with the other end of the battery heat exchanger (11) and the sixth end (R40b) of the third common branch (R40), and the third throttling element (12) being connected in series to the seventh branch (R71); and
the fourth pipeline (R4) further comprises a third branch (R41), the third branch (R41) being in communication with the one end of the second internal heat exchanger (4) and the sixth end (R40b) of the third common branch (R40), and the first throttling element (5) being connected in series to the third branch (R41).

15. The vehicle thermal management system (100) according to claim 14, wherein a part of an upstream of the third common branch (R40), the seventh branch (R71), and the third branch (R41) are each integrated into the integrated module (25).

16. The vehicle thermal management system (100) according to claim 15, wherein the integrated module (25) is internally divided into a first temperature region (251), a second temperature region (252), and a third temperature region (253), the part of the upstream of the third common branch (R40) being located in the first temperature region (251) and the second temperature region (252), a part of the third branch (R41) before the first throttling element (5) being located in the second temperature region (252), a part of the third branch (R41) after the first throttling element (5) being located in the third temperature region (253), a part of the seventh branch (R71) before the third throttling element (12) being located in the second temperature region (252), and a part of the seventh branch (R71) after the third throttling element (12) being located in the third temperature region (253).

17. The vehicle thermal management system (100) according to any one of claims 14 to 16, wherein the sixth pipeline (R6) and the fifth pipeline (R5) have a second common branch (R20), the second common branch (R20) having a third end (R20a) and a fourth end (R20b), the fourth end (R20b) of the second common branch (R20) being in communication with the air inlet (1a); and
the vehicle thermal management system (100) further comprises:
a second heat exchange apparatus (13), having a third heat exchange flow path (13a) and a fourth heat exchange flow path (13b) exchanging heat with each other, the third heat exchange flow path (13a) being connected in series to the third common branch (R40), and the fourth heat exchange flow path (13b) being connected in series to the second common branch (R20).

18. The vehicle thermal management system (100) according to any one of claims 13 to 17, further having:
a battery-only cooling mode, in which the first pipeline (R1), the sixth pipeline (R6), and the seventh pipeline (R7) are all connected; and
a cabin-battery-dual cooling mode, in which the first pipeline (R1), the fourth pipeline (R4), the fifth pipeline (R5), the sixth pipeline (R6), and the seventh pipeline (R7) are all connected.

19. The vehicle thermal management system (100) according to any one of claims 1 to 18, further comprising:
a second system (100b), comprising an engine cooling jacket (17), a drive pump (18), and a heater core (19) being in communication through a first circulation pipeline (100c);
a third heat exchange apparatus (14), having a fifth heat exchange flow path (14a) and a sixth heat exchange flow path (14b) exchanging heat with each other, the fifth heat exchange flow path (14a) being connected in series to the first circulation pipeline (100c) and located downstream of the heater core (19), and the sixth heat exchange flow path (14b) having one end selectively in communication with the other end of the first internal heat exchanger (2) through an eighth pipeline (R8), and another end in communication with the air inlet (1a) through a ninth pipeline (R9); and
a fourth throttling element (15), connected in series to the eighth pipeline (R8).

20. The vehicle thermal management system (100) according to claim 19, wherein the eighth pipeline (R8) and the fourth pipeline (R4) have a first common branch (R30), the first common branch (R30) having a first end (R30a) and a second end (R30b);
the fourth pipeline (R4) further comprises a third branch (R41) and a fourth branch (R42), the third branch (R41) being in communication with the one end of the second internal heat exchanger (4) and the first end (R30a), the first throttling element (5) being connected in series to the third branch (R41), the fourth branch (R42) being in communication with the other end of the external heat exchanger (3) and the second end (R30b), and a check valve (8) being arranged in series connection with the fourth branch (R42), and having an inlet end in communication with the other end of the external heat exchanger (3) and an outlet end in communication with the second end (R30b); and
the eighth pipeline (R8) further comprises an eighth branch (R81) and a ninth branch (R82), the eighth branch (R81) being in communication with the other end of the first internal heat exchanger (2) and the second end (R30b), the ninth branch (R82) being in communication with the first end (R30a) and the one end of the sixth heat exchange flow path (14b), and the fourth throttling element (15) being connected in series to the ninth branch (R82).

21. The vehicle thermal management system (100) according to claim 20, wherein the third branch (R41), the eighth branch (R81), and the ninth branch (R82) are each formed in the integrated module (25), and the fourth branch (R42) and the first common branch (R30) are each arranged outside the integrated module (25).

22. The vehicle thermal management system (100) according to claim 21, wherein the integrated module (25) is internally divided into a first temperature region (251), a second temperature region (252), and a third temperature region (253), a part of the third branch (R41) before the first throttling element (5) being located in the second temperature region (252), a part of the third branch (R41) after the first throttling element (5) being located in the third temperature region (253), the eighth branch (R81) being located in the first temperature region (251), and the ninth branch (R82) being located in the second temperature region (252).

23. The vehicle thermal management system (100) according to any one of claims 19 to 22, wherein the ninth pipeline (R9) and the fifth pipeline (R5) have a second common branch (R20), the second common branch (R20) having a third end (R20a) and a fourth end (R20b), the fourth end (R20b) of the second common branch (R20) being in communication with the air inlet (1a);
the fifth pipeline (R5) further comprises a sixth branch (R51), the sixth branch (R51) being in communication with the other end of the second internal heat exchanger (4) and the third end (R20a) of the second common branch (R20); and
the ninth pipeline (R9) further comprises a tenth branch (R91), the tenth branch (R91) being in communication with the other end of the sixth heat exchange flow path (14b) and the third end (R20a) of the second common branch (R20).

24. The vehicle thermal management system (100) according to claim 23, wherein the sixth branch (R51) and the tenth branch (R91) are each formed in the integrated module (25), and the second common branch (R20) is arranged outside the integrated module (25).

25. The vehicle thermal management system (100) according to claim 24, wherein the integrated module (25) is internally divided into a first temperature region (251), a second temperature region (252), and a third temperature region (253), a part of an upstream of the sixth branch (R51) being located in the third temperature region (253), a part of a downstream of the sixth branch (R51) being located in the first temperature region (251), and the tenth branch (R91) being located in the first temperature region (251).

26. The vehicle thermal management system (100) according to any one of claims 19 to 25, wherein the second system (100b) further comprises:
a reversing element (16), connected in series between the fifth heat exchange flow path (14a) and the drive pump (18), and comprising a first valve port (16a), a second valve port (16b), a third valve port (16c), and a fourth valve port (16d), the first valve port (16a) being switchably in communication with one of the second valve port (16b) and the third valve port (16c), the fourth valve port (16d) being switchably in communication with the other of the second valve port (16b) and the third valve port (16c), the first valve port (16a) being in communication with the drive pump (18), and the second valve port (16b) being in communication with the fifth heat exchange flow path (14a); and
an engine cooling jacket (17), in communication with the third valve port (16c) and the fourth valve port (16d) respectively through a second circulation pipeline.

27. The vehicle thermal management system (100) according to claim 26, wherein the second system (100b) further comprises:
an electric heater (20), connected in series between the drive pump (18) and the heater core (19), and located upstream of the heater core (19).

28. The vehicle thermal management system (100) according to any one of claims 19 to 27, further having:
a water source heat pump heating mode, in which the eighth pipeline (R8) and the ninth pipeline (R9) are all connected, and the drive pump (18) operates; and
an air source-water source-combined heat pump heating mode, in which the second pipeline (R2), the third pipeline (R3), the eighth pipeline (R8), and the ninth pipeline (R9) are all connected, and the first pipeline (R1) and the fourth pipeline (R4) are all disconnected.

29. The vehicle thermal management system (100) according to any one of claims 1 to 28, further comprising:
a battery heat exchanger (11), having one end selectively in communication with the air outlet (1b) through a tenth pipeline (R10);
a third heat exchange apparatus (14), having a fifth heat exchange flow path (14a) and a sixth heat exchange flow path (14b) exchanging heat with each other, the sixth heat exchange flow path (14b) having one end selectively in communication with another end of the battery heat exchanger (11) through an eleventh pipeline (R11) and another end in communication with the air inlet (1a) through a ninth pipeline (R9);
a third throttling element (12), connected in series to the eleventh pipeline (R11); and
a second system (100b), comprising an engine cooling jacket (17), a drive pump (18), and a heater core (19) being in communication through a first circulation pipeline (100c), the fifth heat exchange flow path (14a) being connected in series to the first circulation pipeline (100c) and located downstream of the heater core (19).

30. The vehicle thermal management system (100) according to claim 29, wherein the tenth pipeline (R10) and the eleventh pipeline (R11) are each formed in the integrated module (25).

31. The vehicle thermal management system (100) according to claim 30, wherein the integrated module (25) is internally divided into a first temperature region (251), a second temperature region (252), and a third temperature region (253), the tenth pipeline (R10) and the eleventh pipeline (R11) being each located in the first temperature region (251).

32. The vehicle thermal management system (100) according to any one of claims 29 to 31, further having:
a water source heat pump-battery heating mode, in which the ninth pipeline (R9) and the tenth pipeline (R10) are all connected, and the drive pump (18) operates.

33. The vehicle thermal management system (100) according to any one of claims 29 to 32, wherein the one end of the sixth heat exchange flow path (14b) is in communication with the other end of the first internal heat exchanger (2) through an eighth pipeline (R8); and
the vehicle thermal management system (100) further comprises a fourth throttling element (15), the fourth throttling element (15) being connected in series to the eighth pipeline (R8).

34. The vehicle thermal management system (100) according to claim 33, further having:
a water source heat pump heating-water source heat pump-battery heating combined mode, in which the eighth pipeline (R8), the ninth pipeline (R9), and the tenth pipeline (R10) are all connected, and the drive pump (18) operates.

35. A vehicle (200), comprising the vehicle thermal management system (100) according to any one of claims 1 to 34.
